# EUROPEAN PATENT SPECIFICATION

(11) **EP 3 833 038 B1**
(45) Date of publication and mention of the grant of the patent: **20.07.2022**
(21) Application number: 19214253.7
(22) Date of filing: 06.12.2019
(51) Int. Cl.: H04N 21/436, H04N 21/442, H04L 29/08

(54) **METHOD FOR DELIVERING AUDIO AND/OR VIDEO CONTENTS TO A PLAYER**
VERFAHREN ZUR ABGABE VON AUDIO- UND/ODER VIDEOINHALTEN AN EINEN ABSPIELER
PROCÉDÉ DE FOURNITURE DE CONTENUS AUDIO ET/OU VIDÉO À UN LECTEUR

(43) Date of publication of application: 09.06.2021
(73) Proprietor: Broadpeak, 35510 Cesson Sevigne (FR)
(72) Inventor: MARTIN, Jean-François, 35510 CESSON SEVIGNE (FR); BREBION, Remy, 35510 CESSON SEVIGNE (FR); BOUCHARD, David, 35510 CESSON SEVIGNE (FR); STERKERS, Damien, 35510 CESSON SEVIGNE (FR)
(74) Representative: Cabinet Le Guen Maillet

(56) References cited:
- EP-A1- 2 605 469
- WO-A1-2015/073473
- US-B1- 10 051 046

## Description

### TECHNICAL FIELD

The present invention generally relates to delivering audio and/or video contents to a player. More particularly, the present invention relates to managing load balancing between plural devices from which the player may receive the audio and/or video contents.

### RELATED ART

It is considered an audio and/or video contents delivery system in which plural devices may be contacted by terminals, which respectively include players for consuming audio and/or video contents, from a single local area network. For example, the audio and/or video contents delivery system may include plural set-top boxes via which the audio and/or video contents may be received, said set-top boxes being connected to the same local area network as the terminals. Then, when a user wants to play an audio and/or video content with his/her terminal, the user has to operate his/her terminal in order to select one or the other of the set-top boxes of the local area network in order to obtain the audio and/or video content.

However, when plural such set-top boxes are provided in a same local area network, the intention is to provide increased audio and/or video contents delivery capacity so as to be able to support numerous concurrent terminals. It thus appears that, without adequate load balancing management, some set-top boxes may be overloaded while others may be underused. Indeed, since the selection of the set-top box is performed by each user, many situations in which an audio and/or video content that is not made available through all the set-top boxes is unreachable may occur, because the set-top boxes that are able to provide said audio and/or video content are already overloaded with other users. Moreover, when a user zaps from a first program (live audio and/or video content) to a second program, the user may have to switch to another set-top box if in the meantime other users have connected to the set-top box via which the user was playing the first program. All these situations, and others related to inappropriate or absent load balancing between the set-top boxes, negatively impact Quality of Experience (QoE).

It is thus desirable to overcome the foregoing drawbacks of the prior art.

Patent application EP 2 605 469 relates to a Content Delivery Network (CDN) infrastructure in which load balancing occurs at the instant when the end-user connects to a service.

Patent application WO 2015/073473 relates to a session between a client and a server allowing a disconnection pause during a predetermined amount of time. The client stores a context identifier and/or accessed resources until the session is invalidated by the server.

Patent application US 10 051 046 relates to a client device connected to a web content device and load balancer service acting as an intermediate to advertisers. The connection session between the client device and the load balancer service is subject to a timeout delay.

### SUMMARY OF THE INVENTION

To that end, it is proposed a method for delivering audio and/or video contents to a player in a local area network, the local area network comprising a plurality of content delivery network CDN receiver devices, the CDN receiver devices receiving audio and/or video contents in form of segments through at least one provider network and the CDN receiver devices transferring the received segments of the audio and/or video contents in the local area network so as to enable player-equipped terminals in the local area network to receive the audio and/or video contents, wherein the method comprises: obtaining capacity information from the CDN receiver devices, the capacity information being indication of processing resources actually in use compared with total capacity of the CDN receiver devices; selecting, according to the capacity information, at least one CDN receiver device for delivering an audio and/or video content to the player; detecting that a session for delivering the audio and/or video content to the player starts and ends; when the session for delivering the audio and/or video content from the selected at least one CDN receiver device to the player ends, the selected at least one CDN receiver device holds in place, during a predefined time duration, processing resources for a potential upcoming session for delivering the same or another audio and/or video content to the player; when another session for delivering another audio and/or video content to the player starts before expiry of the predefined time duration, said same or another audio and/or video content is delivered to the player by said selected at least one CDN receiver device using the processing resources hold in place; and when another session for delivering said same or another audio and/or video content to the player starts after expiry of the predefined time duration, reselection of at least one CDN receiver device, according to updated capacity information, is performed to deliver said another audio and/or video content to the player. Thus, by holding in place the processing resources for a potential upcoming session, smooth load balancing in achieved without asking to each CDN receiver device at each new session. Doing so, startup time for playing (consuming) an audio and/or video content is reduced, especially when a user zaps from one live audio and/video content to another.

According to a particular embodiment, the audio and/or video contents are made available to the CDN receivers in various representations so as to enable adaptive bit rate ABR. Thus, quality of the audio and/video content is adapted according to conditions of transmission toward the player.

According to a particular embodiment, the selected at least one CDN receiver device detects that the session for delivering the audio and/or video content to the player starts, when receiving a request for obtaining a manifest file of the audio and/or video content.

According to a particular embodiment, the selected at least one CDN receiver device detects that the session for delivering the audio and/or video content to the player starts, when receiving a message indicating that said session starts.

According to a particular embodiment, the selected at least one CDN receiver device detects that the session for delivering the audio and/or video content to the player ends, when detecting that no request related to said delivery of the audio and/or video content to the player has been received by said selected at least one CDN receiver device during a predefined time duration.

According to a particular embodiment, the audio and/or video contents are made available to the CDN receivers in multicast form and the CDN receiver devices are de-multicasters converting in unicast form the segments received in multicast form through the at least one provider network.

According to a particular embodiment, each CDN receiver device transmits its capacity information at the same time as responding to a request for checking whether or not the audio and/or video content to be consumed is made available through the CDN receiver device in question.

According to a particular embodiment, when the capacity information transmitted by at least one CDN receiver device in response to a request for checking whether or not the audio and/or video content to be consumed is made available through the CDN receiver device in question has changed, the method further comprises requesting capacity information to each other CDN receiver device in order to obtain updated capacity information.

According to a particular embodiment, obtaining capacity information from the CDN receiver devices and selecting, according to the capacity information, the at least one CDN receiver device for delivering the audio and/or video content to the player are performed by an application associated with the player.

According to a particular embodiment, obtaining capacity information from the CDN receiver devices and selecting, according to the capacity information, the at least one CDN receiver device for delivering the audio and/or video content to the player are performed by one CDN receiver to which an application associated with the player requests whether or not the audio and/or video content to be consumed is made available through the CDN receiver device in question.

According to a particular embodiment, when the session implies delivering the audio and/or video content to the player from plural selected CDN receiver devices, the player communicates with a proxy device for receiving the segments of the audio and/or video content and the proxy device communicates with the plural selected CDN receiver devices for obtaining the segments of the audio and/or video content while managing load balancing for delivering the audio and/or video content to the player.

According to a particular embodiment, when the proxy device receives from the player a request for obtaining a manifest file of the audio and/or video content, the proxy device transmits one such request for obtaining a manifest file of the audio and/or video content to each one of said plural selected CDN receiver devices.

It is further proposed an audio and/or video contents delivery system configured for delivering audio and/or video contents to a player in a local area network, the local area network comprising a plurality of content delivery network CDN receiver devices of the audio and/or video contents delivery system, the CDN receiver devices receiving audio and/or video contents in form of segments through at least one provider network and the CDN receiver devices transferring the received segments of the audio and/or video contents in the local area network so as to enable player-equipped terminals in the local area network to receive the audio and/or video contents, wherein the audio and/or video contents delivery system comprises: means for obtaining capacity information from the CDN receiver devices, the capacity information being indication of processing resources actually in use compared with total capacity of the CDN receiver devices; means for selecting, according to the capacity information, at least one CDN receiver device for delivering an audio and/or video content to the player; and means for detecting that a session for delivering the audio and/or video content to the player starts and ends. The audio and/or video contents delivery system is further configured as follows: when the session for delivering the audio and/or video content from the selected at least one CDN receiver device to the player ends, the selected at least one CDN receiver device holds in place, during a predefined time duration, processing resources for a potential upcoming session for delivering the same or another audio and/or video content to the player; when another session for delivering another audio and/or video content to the player starts before expiry of the predefined time duration, said same or another audio and/or video content is delivered to the player by said selected at least one CDN receiver device using the processing resources hold in place; and when another session for delivering said same or another audio and/or video content to the player starts after expiry of the predefined time duration, reselection of at least one CDN receiver device, according to updated capacity information, is performed to deliver said another audio and/or video content to the player.

### BRIEF DESCRIPTION OF THE DRAWINGS

The characteristics of the invention will emerge more clearly from a reading of the following description of at least one embodiment, said description being produced with reference to the accompanying drawings, among which:
- Fig. 1 schematically represents an audio and/or video content delivery system in which the present invention may be implemented;
- Fig. 2 schematically represents an example of hardware architecture of a device usable in the scope of the audio and/or video content delivery system;
- Fig. 3 schematically represents exchanges occurring in the audio and/or video content delivery system, according to a first embodiment for obtaining de-multicaster capacity information;
- Fig. 4 schematically represents exchanges occurring in the audio and/or video content delivery system, according to a first embodiment for delivering the audio and/or video content;
- Fig. 5 schematically represents exchanges occurring in the audio and/or video content delivery system, according to a second embodiment for delivering the audio and/or video content;
- Fig. 6 schematically represents exchanges occurring in the audio and/or video content delivery system, according to a third embodiment for delivering the audio and/or video content;
- Fig. 7 schematically represents exchanges occurring in the audio and/or video content delivery system, according to a second embodiment for obtaining de-multicaster capacity information;
- Fig. 8 schematically represents exchanges occurring in the audio and/or video content delivery system, according to a fourth embodiment for delivering the audio and/or video content;
- Fig. 9 schematically represents exchanges occurring in the audio and/or video content delivery system, according to a fifth embodiment for delivering the audio and/or video content;
- Fig. 10 schematically represents exchanges occurring in the audio and/or video content delivery system, according to a sixth embodiment for delivering the audio and/or video content; and
- Figs. 11A and 11B jointly represent schematically exchanges occurring in the audio and/or video content delivery system, according to a seventh embodiment for delivering the audio and/or video content.

### DETAILED DESCRIPTION OF AT LEAST ONE EMBODIMENT

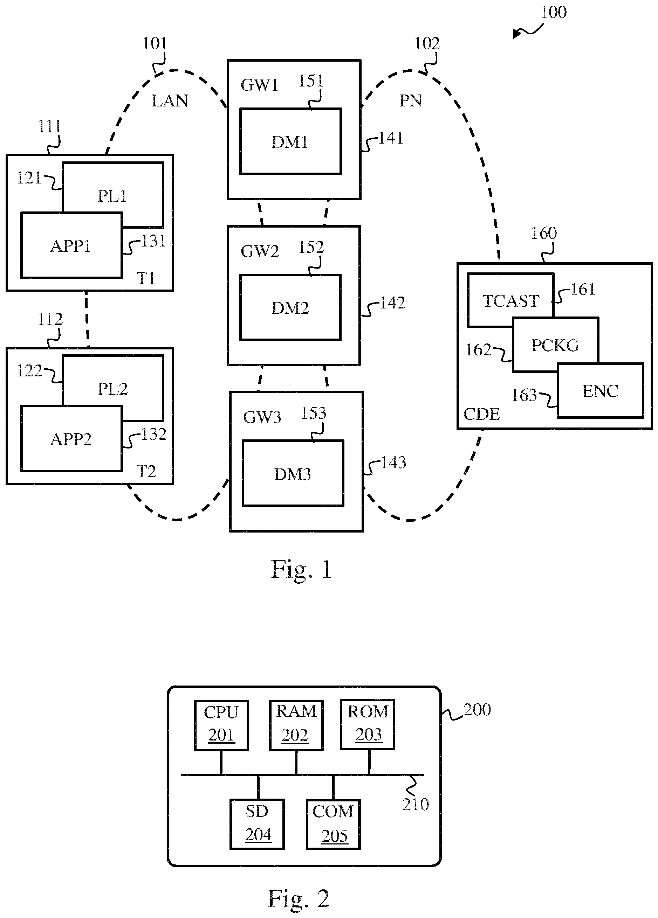

**Fig. 1** schematically represents an audio and/or video content delivery system 100. The audio and/or video content delivery system 100 comprises a content delivery server equipment CDE 160 configured for delivering audio and/or video contents via at least one provider network PN 102. The content delivery server equipment CDE 160 is configured to deliver the audio and/or video contents, preferably in multicast fashion or in broadcast fashion, for instance using satellite broadcast communications. It is illustratively considered hereinafter that the audio and/or video contents are delivered in multicast fashion (broadcast transmission being a particular case of multicast transmission). The content delivery server equipment CDE 160 may, in a variant, be configured to deliver the audio and/or video contents in unicast fashion, in accordance with transmission direction capabilities of the provider network PN 102.

In a particular embodiment, the content delivery server equipment CDE 160 comprises an encoder device ENC 163, a packager device PCKG 162 and a transcaster device TCAST 161. The encoder device ENC 163 is configured to encode the audio and/or video contents according to at least one audio and/or video format.

Preferably, the encoder device ENC 163 encodes the audio and/or video contents in a variety of bit rates, so as to enable implementation of Adaptive Bit Rate (ABR) streaming. When Adaptive Bit Rate is implemented, a manifest file (or, depending on the Adaptive Bit Rate technology in use, a playlist file) describes the various representations made available.

The packager device PCKG 162 is configured to package and serve the audio and/or video contents, as encoded by the encoder device ENC 163, in the form of segments. When plural representations of an audio and/or video content are available (in the case of Adaptive Bit Rate), the segments corresponding to the same portion of the audio and/or video content are aligned (same duration, same starting frame content), preferably as a set of media files. The transcaster device TCAST 161 is configured to transmit the segments over the provider network PN 102 using a transport protocol, for instance in the form of one IP (Internet Protocol) multicast stream per representation of the audio and/or video content in question. When the provider network PN 102 is a bidirectional communications network or is a unidirectional network combined with a bi-directional network, the content delivery server equipment CDE 160 may include a unicast server device configured to provide, on demand, segments in a unicast fashion for repairing purpose when a segment has been missed on reception, or lost or corrupted over the provider network PN 102.

The audio and/or video content delivery system 100 further comprises gateways embedding respective de-multicaster devices. The de-multicaster devices are configured to extract, from the transport protocol used by the transcaster device TCAST 161, segments of audio and/or video contents transmitted in multicast or broadcast fashion over the provider network PN 102.

Plural gateways may be placed at a same location, so as to expend audio and/or video content delivery capability at said location and thus share fulfilment of audio and/or video content delivery needs at said location. For instance, some hotels, universities or shops may need more audio and/or video content delivery capability than a single gateway can offer. The situation is illustrated in Fig. 1. Three gateways GW1 141, GW2 142, GW3 143 are placed at a same location, in such a way that all these three gateways GW1 141, GW2 142, GW3 143 are connected to a same local area network LAN 101. For instance, the gateways GW1 141, GW2 142, GW3 143 are stacked. Therefore, terminals T1 111, T2 112 connected to the local area network LAN 101 are able to receive audio and/or video contents provided by the content delivery server equipment CDE 160 via one or the other of the three gateways GW1 141, GW2 142, GW3 143. More particularly, the gateways GW1 141, GW2 142, GW3 143 respectively include de-multicaster devices DM1 151, DM2 152, DM3 153. The de-multicaster devices DM1 151, DM2 152, DM3 153 are configured to extract, from the transport protocol used by the transcaster device TCAST 161, segments of audio and/or video contents transmitted over the provider network PN 102, and to further transmit the segments of audio and/or video contents to terminals connected to the local area network LAN 101. The de-multicaster devices DM1 151, DM2 152, DM3 153 communicate in unicast form with the terminals connected to the local area network LAN 101. Therefore, the de-multicaster devices DM1 151, DM2 152, DM3 153 are configured to perform conversion of multicast or broadcast data received via the provider network PN 102 into unicast data to be addressed to the terminals connected to the local area network LAN 101. As already mentioned, when a segment has been missed on reception, or lost or corrupted over the provider network PN 102, the de-multicaster devices DM1 151, DM2 152, DM3 153 may request the segment in question to a unicast server device of the content delivery server equipment CDE 160, and then insert the segment data received from the unicast server device into the multicast data for further transmission on the local area network LAN 101.

The terminals T1 111, T2 112 respectively comprise players PL1 121, PL2 122. The terminals T1 111, T2 112 respectively further comprise applications APP1 131, APP2 132. The applications APP1 131, APP2 132 are typically external to the players PL1 121, PL2 122, which enables using third-party players not aware of the presence of plural de-multicaster devices in the local area network LAN 101. The applications APP1 131, APP2 132 may, in a variant, be integrated in the players PL1 121, PL2 122.

The players PL1 121, PL2 122 are configured to decode the encoded segments according to the encoding format used by the encoder device ENC 163 to encode the audio and/or video contents consumed by the players PL1 121, PL2 122. The players PL1 121, PL2 122 are configured to consume (e.g., play, record) audio and/or video contents respectively received by the terminals T1 111, T2 112 in unicast form via respectively the applications APP1 131, APP2 132. As detailed hereafter, the applications APP1 131, APP2 132 shape the received audio and/or video content data intended to be respectively consumed by the players PL1 121, PL2 122 so that the audio and/or video content data are in a form adequate to the players PL1 121, PL2 122. Each of the applications APP1 131, APP2 132 is configured to communicate with one or the other of the de-multicaster devices DM1 151, DM2 152, DM3 153, or a proxy device in case of multipath transmission, and to receive therefrom the audio and/or video contents using preferably HTTP (HyperText Transport Protocol), and the players PL1 121, PL2 122 are for instance configured to consume content conforming to HAS ("HTTP Adaptive Streaming") scheme. The terminals T1 111, T2 112 are thus not able to receive audio and/or video contents in neither multicast nor broadcast form. The players PL1 121, PL2 122 are agnostic to the infrastructure of the audio and/or video content delivery system 100.

It may be noted that, although Fig. 1 shows all the de-multicaster devices DM1 151, DM2 152, DM3 153 configured to receive audio and/or video contents from the same content delivery server equipment CDE 160, the de-multicaster devices DM1 151, DM2 152, DM3 153 may be configured to receive audio and/or video contents from distinct respective content delivery server equipment.

As detailed hereafter in various embodiments, delivering audio and/or video contents to the players PL1 121, PL2 122 comprises:
- obtaining capacity information from the de-multicaster devices DM1 151, DM2 152, DM3 153;
- selecting, according to the capacity information, at least one de-multicaster device among the de-multicaster devices DM1 151, DM2 152, DM3 153 for delivering an audio and/or video content to the player;
- when a session for delivering the audio and/or video content from the selected at least one de-multicaster device to the player ends, the selected at least one de-multicaster device holds in place, during a predefined time, processing resources for a potential upcoming session for delivering the same or another audio and/or video content to the player;
- when another session for delivering the same or said another audio and/or video content to the player is initiated before expiry of the predefined time, said another audio and/or video content is delivered to the player by said selected at least one de-multicaster device using the processing resources hold in place; and
- when another session for delivering the same or said another audio and/or video content to the player is initiated after expiry of the predefined time, reselection of at least one de-multicaster device, according to updated capacity information, is performed to deliver said another audio and/or video content to the player.

Doing so links, as frequently as possible, a player to the same de-multicaster device(s) for obtaining audio and/or video contents segments. This ensures smooth load balancing without interrogating each de-multicaster device at each new session. This reduces latency for starting up the new session, which increases Quality of Experience (QoE), especially when an end-user zaps from one live audio and/video content to another.

**Fig. 2** schematically represents an example of hardware architecture usable in the scope of the audio and/or video content delivery system. The example of hardware architecture may be part of the gateways GW1 141, GW2 142, GW3 143 and/or the terminals T1 111, T2 112 and/or the server equipment CDE 160. Let's generally consider that the example of hardware architecture is part of a communication device 200.

According to the shown architecture, the communication device 200 comprises the following components interconnected by a communications bus 210: a processor, microprocessor, microcontroller or CPU (Central Processing Unit) 201; a RAM (Random-Access Memory) 202; a ROM (Read-Only Memory) 203, such as an EEPROM (Electrically Erasable Programmable ROM), for example a Flash memory; a HDD (Hard-Disk Drive) 204, or any other device adapted to read information stored on a storage medium, such an SD (Secure Digital) card reader; at least one communication interface 205.

CPU 201 is capable of executing instructions loaded into RAM 202 from ROM 203 or from an external memory, such as HDD 204 or an SD card. After the communication device 200 has been powered on, CPU 201 is capable of reading instructions from RAM 202 and executing these instructions. The instructions form one computer program that causes CPU 201 to perform the steps performed by the communication device in question as described herein.

Thus, the steps, behaviors and algorithms described herein may be implemented in software form by execution of a set of instructions or program by a programmable computing machine, such as a PC, a DSP (Digital Signal Processor) or a microcontroller; or else implemented in hardware form by a machine or a dedicated component, such as an FPGA (Field-Programmable Gate Array) or an ASIC (Application-Specific Integrated Circuit). Generally speaking, the communication device 200 comprises electronics circuitry adapted and configured for implementing the steps, behaviors and algorithms described herein with respect to the communication device 200 in question.

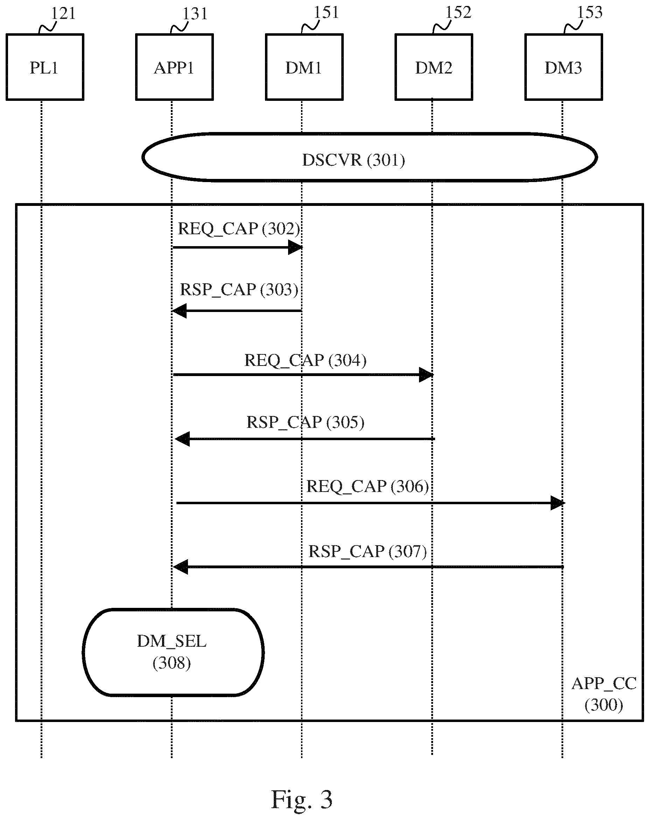

**Fig. 3** schematically represents exchanges occurring in the audio and/or video content delivery system 100, according to a first embodiment for obtaining capacity information of de-multicaster devices.

In a step 301, the application APP1 131, the de-multicaster device DM1 151, the de-multicaster device DM2 152 and the de-multicaster device DM3 153 perform a discovery procedure (labelled DSCVR). Other terminals, such as terminal T2 112, when present in the local area network LAN 101 also participate in the discovery procedure (via the application APP2 132 for the terminal T2 112). During the discovery procedure, the concerned communication devices export their respective functions. More particularly, the de-multicaster device DM1 151, the de-multicaster device DM2 152 and the de-multicaster device DM3 153 announce their presence in the local area network LAN 101 and announce their respective de-multicasting functions. The discovery procedure for instance uses an SDP ("Service Discovery Protocol") protocol, such as SSDP ("Simple Service Discovery Protocol") protocol as also used in UPnP ("Universal Plug n' Play", as defined by the normative document ISO/IEC 29341) protocol, or the technology Zeroconf, such as Apple's Bonjour.

In a step 302, the application APP1 131 transmits a request REQ_CAP to the de-multicaster device DM1 151. The request REQ_CAP is a message requesting information about actual capacity in terms of audio and/or video processing resources of the communication device to which the request REQ_CAP is addressed. Such capacity information is more particularly an indication of processing resources actually in use compared with total capacity of the communication device (de-multicaster device) in question.

In a step 303, the de-multicaster device DM1 151 transmits a response RSP_CAP to the request REQ_CAP transmitted by the application APP1 131 in the step 302, wherein the response RSP_CAP includes the capacity information requested by the request REQ_CAP. The response RSP_CAP includes for instance the following capacity information: actual load (LD, in percentage), number of actual concurrent sessions (NB_SESS), maximum number of acceptable concurrent sessions (MAX_SESS), and optionally actual average output bitrate and maximum acceptable output bitrate.

In a step 304, the application APP1 131 identically transmits a request REQ_CAP to the de-multicaster device DM2 152; and in a step 305, the de-multicaster device DM2 152 transmits a response RSP_CAP to the request REQ_CAP transmitted by the application APP1 131 in the step 304.

In a step 306, the application APP1 131 identically transmits a request REQ_CAP to the de-multicaster device DM3 153; and in a step 307, the de-multicaster device DM3 153 transmits a response RSP_CAP to the request REQ_CAP transmitted by the application APP1 131 in the step 304.

Once the application APP1 131 has gathered capacity information of all the de-multicaster devices present in the local area network LAN 101, the application APP1 131 orders the de-multicaster devices according to their capacity information and selects, in a step 308, as default entry point to the audio and/or video content delivery system 100, the de-multicaster device for which the capacity information shows the highest remaining capacity among the de-multicaster devices present in the local area network LAN 101.

Ordering according to the capacity information may be done by applying the following rule for associating each de-multicaster device with a capacity score CS as follows, where the de-multicaster devices are then ordered in decreasing order of the capacity score CS:

```
      If (NB_SESS < MAX_SESS)
        CS = 1 - ((NB_SESS / MAX_SESS) ∗ LD/100
      Else
        CS = 0
```

Other rules may be used to determine such a capacity score CS from the capacity information and to consequently order the de-multicaster devices according to their actual load or remaining capacity.

The steps 302 to 308 jointly form a process APP_CC 300 of checking capacity of the de-multicaster devices present in the local area network LAN 101 by the application APP1 131 and of selecting a default entry point to the audio and/or video content delivery system 100. Typically, the application APP1 131 maintains an ordered list L of the de-multicaster devices present in the local area network LAN 101, and the de-multicaster device showing the highest remaining capacity appears on top, or at the bottom, of the ordered list L, depending on the rule(s) used to determine the capacity score CS. Similar process is performed by the application APP2 132 for checking capacity of the de-multicaster devices present in the local area network LAN 101. Let's illustratively consider hereafter that the de-multicaster device DM2 152 is the best candidate of the process APP_CC 300 in view of the capacity information provided by the de-multicaster devices present in the local area network LAN 101.

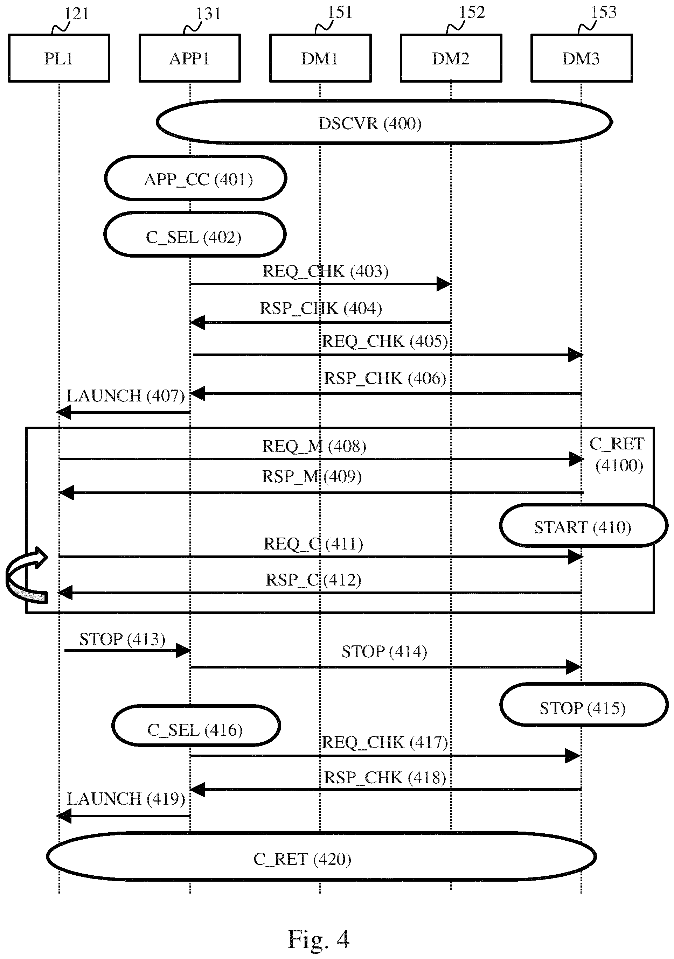

**Fig. 4** schematically represents exchanges occurring in the audio and/or video content delivery system 100, according to a first embodiment for delivering the audio and/or video content.

In a step 400, the application APP1 131, the de-multicaster device DM1 151, the de-multicaster device DM2 152 and the de-multicaster device DM3 153 perform the discovery procedure, as already explained with respect to the step 301.

In a step 401, the application APP1 131 performs the process APP_CC as detailed above with respect to Fig. 3. The application APP1 131 thus maintains the ordered list L of the de-multicaster devices present in the local area network LAN 101, according to their capacity information.

In a step 402, the application APP1 131 selects an audio and/or video content to be consumed (referred herein to as process C_SEL). For instance, a user selects the audio and/or video content via a graphical user interface (GUI) of the terminal T1 111.

Next, in a step 403, the application APP1 131 checks whether or not the audio and/or video content to be consumed is made available through the de-multicaster device DM2 152, which is illustratively the de-multicaster device showing the highest remaining capacity according to the ordered list L maintained by the application APP1 131. To do so, the application APP1 131 transmits to the de-multicaster device DM2 152 a request REQ_CHK. The request REQ_CHK is a message including information representative of the selected audio and/or video content and requesting confirmation that the de-multicaster device DM2 152 is able to provide said audio and/or video content to the terminal T1 111.

Each de-multicaster device stores a list of audio and/or video contents made available thereto via the provider network PN 102. The de-multicaster device in question obtains the list of audio and/or video contents made available thereto for instance through a dedicated broadcast or multicast channel, or by interrogating a predefined configuration server.

In a step 404, the de-multicaster device DM2 152 transmits a response RSP_CHK to the request REQ_CHK transmitted by the application APP1 131 in the step 403. The response RSP_CHK includes either an error code when the de-multicaster device DM2 152 is not able to deliver the selected audio and/or video content to the terminal T1 111 or a confirmation code otherwise. The de-multicaster device DM2 152 may not be able to deliver the selected audio and/or video content when the selected audio and/or video content is not accessible by the de-multicaster device DM2 152, or when the de-multicaster device DM2 152 has run out of processing resources (since the execution of the process APP_CC of the step 401). Let's illustratively consider that the de-multicaster device DM2 152 is not able to deliver the selected audio and/or video content and that the response RSP_CHK includes a corresponding error code.

Then, the application APP1 131 checks whether or not the audio and/or video content to be consumed is made available through the de-multicaster device that appears next in the ordered list L. Let's illustratively consider that the de-multicaster device DM3 153 corresponds to the next item in the ordered list L. Therefore, in a step 405, the application APP1 131 checks whether or not the audio and/or video content to be consumed is made available through the de-multicaster device DM3 153, by transmitting thereto a request REQ_CHK. In a step 406, the de-multicaster device DM3 153 transmits a response RSP_CHK to the request REQ_CHK transmitted by the application APP1 131 in the step 405. Let's illustratively consider that the de-multicaster device DM3 153 is able to deliver the selected audio and/or video content and that the response RSP_CHK includes a corresponding confirmation code.

In a step 407, the application APP1 131 launches the player PL1 121 for consuming the selected audio and/or video content. To do so, the application APP1 131 transmits to the player PL1 121 a message LAUNCH including an identifier of the de-multicaster device DM3 153 (e.g., IP address of the de-multicaster device DM3 153) and information representative of the selected audio and/or video content (e.g., an URL path pointing to the selected audio and/or video content or preferably to a manifest file representative thereof).

One should note that, depending on the Adaptive Bit Rate technology in use, the manifest file may be equivalently be named playlist file. It provides a description of the various representations in which the audio and/or video content in question is made available by the content delivery server equipment CDE 160.

In a step 408, the player PL1 121 transmits to the de-multicaster device DM3 153 (according to the content of the LAUNCH message) a request REQ_M. The request REQ_M is a unicast message requesting receiving the manifest file of the selected audio and/or video content. The request REQ_M therefore contains information representative of the selected audio and/or video content (e.g., an URL path pointing to the manifest file as provided in the LAUNCH message).

In the step 409, the de-multicaster device DM3 153 confirms, to the player PL1 121, availability of the selected audio and/or video content, by sending the requested manifest file. Receiving the request REQ_M and responding thereto triggers, internally to the de-multicaster device DM3 153, a recordation of the start of the session (step 410). When Adaptive Bit Rate is not implemented, there is no manifest file. Thus, in a variant, the de-multicaster device DM3 153 detects the start of the session upon receiving a dedicated message from the application APP1 131. In another variant, the de-multicaster device DM3 153 detects the start of the session upon receiving a first (in sequence) request REQ_C (as detailed below) from the player PL1 121 for the audio and/or video content in question.

In a step 411, the player PL1 121 transmits to the de-multicaster device DM3 153 a request REQ_C. The request REQ_C is a unicast message requesting receiving at least one segment of the selected audio and/or video content. The request REQ_C therefore contains information representative of the selected audio and/or video content (e.g., an URL path pointing to the selected audio and/or video content). For instance, the request REQ_C is a HTTP Get message, further including a parameter indicating in which representation (quality), among the ones advertised in the manifest file acquired during the step 409, the at least one segment is requested. In a step 412, the de-multicaster device DM3 153 transmits a response RSP_C to the request REQ_C transmitted by the player PL1 121 in the step 411, wherein the response RSP_C includes at least one segment of the audio and/or video content. The player PL1 121 can then consume the received at least one segment. The steps 411 and 412 can be reiterated so as to enable the player PL1 121 to further receive at least one subsequent segment of the selected audio and/or video content.

The steps 408 to 412 jointly form a process C_RET 4100 of delivering the selected audio and/or video content.

In order to be able to respond to the requests REQ_C related to the audio and/or video content in question, which are transmitted by the player PL1 121, the de-multicaster device DM3 153 obtains segments of said audio and/or video content from the content delivery server equipment CDE 160, for instance by joining a multicast stream on the provider network PN 102 in which the segments of said audio and/or video content are transmitted (considering here that the audio and/or video content is a live content).

In a step 413, the application APP1 131 detects that the player PL1 121 has ended the session. This may be done by the player PL 121 notifying the application APP1 131 (e.g. by a message STOP) that consumption of the audio and/or video content has ended.

In a step 414, the application APP1 131 notifies (e.g. by a message STOP) the de-multicaster device DM3 153 that consumption of the audio and/or video content has ended. In a variant without notification from the application APP1 131 to the de-multicaster device DM3 153, the de-multicaster device DM3 153 is able to detect that the session for delivering said audio and/or video content to the player PL1 121 has ended, when a predefined time PT1 has elapsed since the latest transmission of a request (either REQ_M or REQ_C) from the player PL1 121 with respect to the audio and/or video content in question. This triggers, internally to the de-multicaster device DM3 153, a recordation of the stop of the session (step 415).

Despite the end of the session, the de-multicaster device DM3 153 holds in place processing resources for a potential upcoming session for delivering an audio and/or video content to the player PL1 121. The processing resources in question are hold in place for a predefined time PT2. If no subsequent session is started within said predefined time PT2 for delivering an audio and/or video content to the player PL1 121, the de-multicaster device DM3 153 frees the processing resources in question. The predefined time PT2 may be fixed or configurable. Doing so allows efficiently managing load balancing between the de-multicaster devices present in the local area network LAN 101, especially when at least one user zaps from one live program to another, which gives rise to successive short sessions.

Thus, considering that a new session is initiated before expiration of the predefined time PT2, the application APP1 131 selects, in a step 416, the same or another audio and/or video content to be consumed (process C_SEL). For instance, the user selects said same or another audio and/or video content via the graphical user interface (GUI) of the terminal T1 111.

The application APP1 131 checks whether or not the newly selected audio and/or video content to be consumed is made available through the de-multicaster device that was used during the preceding session, namely the de-multicaster device DM3 153. Therefore, in a step 417, the application APP1 131 checks whether or not the newly selected audio and/or video content is made available through the de-multicaster device DM3 153, by transmitting thereto a request REQ_CHK including information representative of the newly selected audio and/or video content and requesting confirmation that the newly selected audio and/or video content is made available. In a step 418, the de-multicaster device DM3 153 transmits a response RSP_CHK to the request REQ_CHK transmitted by the application APP1 131 in the step 417. Let's illustratively consider that the de-multicaster device DM3 153 is able to deliver the newly selected audio and/or video content and that the response RSP_CHK includes a corresponding confirmation code.

In a step 419, the application APP1 131 restarts the player PL1 121 for consuming the newly selected audio and/or video content. To do so, the application APP1 131 transmits to the player PL1 121 a message LAUNCH including an identifier of the de-multicaster device DM3 153 (e.g., IP address of the de-multicaster device DM3 153) and information representative of the newly selected audio and/or video content (e.g., an URL path pointing to the newly selected audio and/or video content or preferably to a manifest file representative thereof). Then, in a step 420, the process C_RET is repeated for delivering the newly selected audio and/or video content. Identically as explained in the process C_RET 4100, the de-multicaster device DM3 153 performs a recordation of the start of the new session when receiving the request REQ_M and responding thereto. In a variant, the de-multicaster device DM3 153 detects the start of the new session upon receiving a dedicated message from the application APP1 131. In another variant, the de-multicaster device DM3 153 detects the start of the new session upon receiving a first (in sequence) request REQ_C from the player PL1 121 for the audio and/or video content in question.

In the case where a new session is initiated by the application APP1 131 whereas the predefined time PT2 has expired since the end of the preceding session, availability of processing resources for the new session cannot be ensured by the de-multicaster device DM3 153. The application APP1 131 thus has to select again a de-multicaster among the de-multicaster devices present in the local area network LAN 101, by using an updated version of the ordered list L (updated capacity information).

Interrogating the de-multicaster devices present in the local area network LAN 101 using the process APP_CC may be done on a regular basis by the application APP1 131 in order to keep the best accurate view of their actual capability information. The application APP1 131 updates the ordered list L when the process APP_CC reveals that capacity information has changed for at least one de-multicaster device present in the local area network LAN 101.

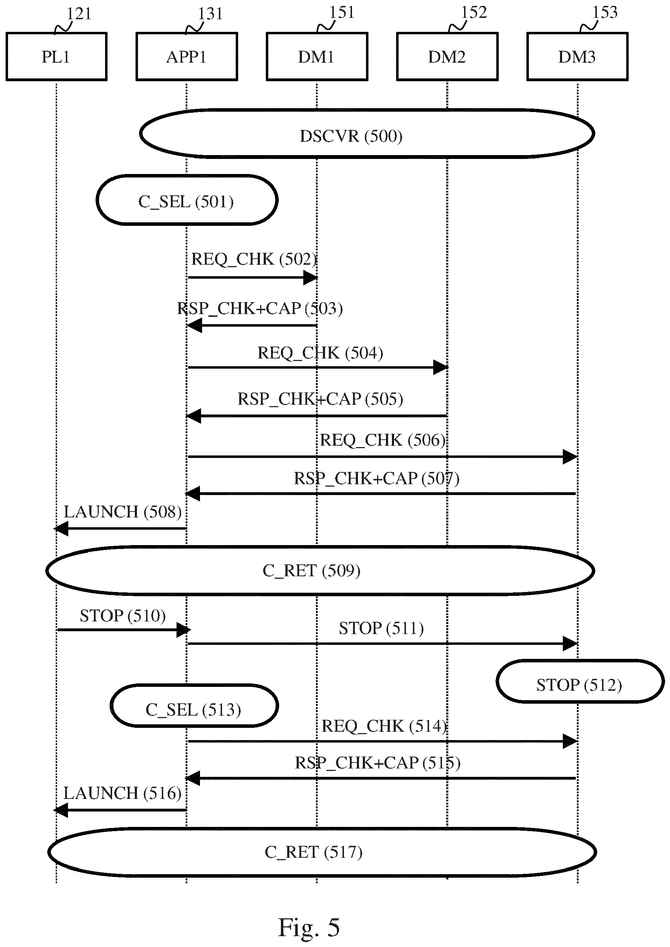

**Fig. 5** schematically represents exchanges occurring in the audio and/or video content delivery system, according to a second embodiment for delivering the audio and/or video content. In the second embodiment, obtaining capacity information from the de-multicaster devices is performed at the same time as checking availability of an audio and/or video content before the de-multicaster devices. Overhead related to message exchanges is thus limited.

In a step 500, the application APP1 131, the de-multicaster device DM1 151, the de-multicaster device DM2 152 and the de-multicaster device DM3 153 perform the discovery procedure, as already explained with respect to the step 301.

In a step 501, the application APP1 131 selects an audio and/or video content to be consumed (process C_SEL).

Next, the application APP1 131 checks whether or not the audio and/or video content to be consumed is made available through any of the de-multicaster devices DM1 151, DM2 152, DM3 153 using requests REQ_CHK. In this second embodiment for delivering the audio and/or video content, each de-multicaster device interrogated by the application APP1 131 replies to the corresponding request REQ_CHK with a response RSP_CHK, wherein the response RSP_CHK also includes capacity information concerning the de-multicaster device in question.

Thus, in a step 502, the application APP1 131 transmits to the de-multicaster device DM1 151 a request REQ_CHK. The request REQ_CHK is a message including information representative of the selected audio and/or video content and requesting confirmation that the de-multicaster device DM1 151 is able to provide said audio and/or video content to the terminal T1 111. As already explained with respect to Fig. 4, each de-multicaster device stores a list of audio and/or video contents made available thereto via the provider network PN 102.

Then, in a step 503, the de-multicaster device DM1 151 transmits a response RSP_CHK to the request REQ_CHK transmitted by the application APP1 131 in the step 502. In addition to including an error code or a confirmation code, the response RSP_CHK further includes capacity information related to the de-multicaster device DM1 151 (as already addressed with respect to Fig. 3). In addition to including an error code or a confirmation code, the response RSP_CHK further includes capacity information related to the de-multicaster device DM1 151. Let's illustratively consider that the de-multicaster device DM1 151 is able to deliver the selected audio and/or video content and that the response RSP_CHK includes a corresponding confirmation code.

In a step 504, the application APP1 131 also transmits to the de-multicaster device DM2 152 a request REQ_CHK for the selected audio and/or video content. Then, in a step 505, the de-multicaster device DM2 152 transmits a response RSP_CHK to the request REQ_CHK transmitted by the application APP1 131 in the step 504. In addition to including an error code or a confirmation code, the response RSP_CHK further includes capacity information related to the de-multicaster device DM2 152. Let's illustratively consider that the de-multicaster device DM2 152 is not able to deliver the selected audio and/or video content and that the response RSP_CHK includes a corresponding error code.

In a step 506, the application APP1 131 also transmits to the de-multicaster device DM3 153 a request REQ_CHK for the selected audio and/or video content. Then, in a step 507, the de-multicaster device DM3 153 transmits a response RSP_CHK to the request REQ_CHK transmitted by the application APP1 131 in the step 506. In addition to including an error code or a confirmation code, the response RSP_CHK further includes capacity information related to the de-multicaster device DM3 153. Let's illustratively consider that the de-multicaster device DM2 152 is not able to deliver the selected audio and/or video content and that the response RSP_CHK includes a corresponding error code.

Once the application APP1 131 has gathered capacity information of all the de-multicaster devices present in the local area network LAN 101, the application APP1 131 orders the de-multicaster devices according to their capacity information so as to build the ordered list L already mentioned with respect to Fig. 3. The application APP1 131 selects the de-multicaster device that shows the highest capacity among the de-multicaster devices present in the local area network LAN 101 and that is able to deliver the audio and/or video content in question. Let's illustratively consider that the application APP1 131 selects in accordance the de-multicaster device DM3 153.

In a step 508, the application APP1 131 launches the player PL1 121 for consuming the selected audio and/or video content. To do so, the application APP1 131 transmits to the player PL1 121 a message LAUNCH including an identifier of the de-multicaster device DM3 153 (e.g., IP address of the de-multicaster device DM3 153) and information representative of the selected audio and/or video content (e.g., an URL path pointing to the selected audio and/or video content or preferably to a manifest file representative thereof).

Then, a process C_RET 509 (as detailed with respect to Fig. 4) is performed between the player PL1 121 and the de-multicaster device DM3 153 for delivering the selected audio and/or video content to the terminal T1 111. Identically as explained in the process C_RET 4100, the de-multicaster device DM3 153 performs a recordation of the start of the session when receiving the request REQ_M and responding thereto. When Adaptive Bit Rate is not implemented, there is no manifest file. Thus, in a variant, the de-multicaster device DM3 153 detects the start of the session upon receiving a dedicated message from the application APP1 131. In another variant, the de-multicaster device DM3 153 detects the start of the session upon receiving a first (in sequence) request REQ_C from the player PL1 121 for the audio and/or video content in question.

In a step 510, the application APP1 131 detects that the player PL1 121 has ended the session. This may be done by the player PL1 121 notifying the application APP1 131 (e.g. by a message STOP) that consumption of the audio and/or video content has ended.

In a step 511, the application APP1 131 notifies (e.g. by a message STOP) the de-multicaster device DM3 153 that consumption of the audio and/or video content has ended. In a variant without notification from the application APP1 131, the de-multicaster device DM3 153 is able to detect that the session for delivering said audio and/or video content to the player PL1 121 has ended, when the predefined time PT1 has elapsed since the latest transmission of a request (either REQ_M or REQ_C) in the process C_RET 509. This triggers, internally to the de-multicaster device DM3 153, a recordation of the stop of the session (step 512).

Despite the end of the session, the de-multicaster device DM3 153 holds in place, during the predefined time PT2, processing resources for a potential upcoming session for delivering an audio and/or video content to the player PL1 121. If no subsequent session is started within said predefined time PT2 for delivering an audio and/or video content to the player PL1 121, the de-multicaster device DM3 153 frees the processing resources in question.

Thus, considering that a new session is initiated before expiration of the predefined time PT2, the application APP1 131 selects, in a step 513, the same or another audio and/or video content to be consumed (process C_SEL).

The application APP1 131 checks whether or not the newly selected audio and/or video content to be consumed is made available through the de-multicaster device that was used during the preceding session, namely the de-multicaster device DM3 153. Therefore, in a step 514, the application APP1 131 checks whether or not the newly selected audio and/or video content is made available through the de-multicaster device DM3 153, by transmitting thereto a request REQ_CHK including information representative of the newly selected audio and/or video content and requesting confirmation that the newly selected audio and/or video content is made available. In a step 515, the de-multicaster device DM3 153 transmits a response RSP_CHK to the request REQ_CHK transmitted by the application APP1 131 in the step 514, wherein the response RSP_CHK contains capacity information related to the de-multicaster device DM3 153. When the newly selected audio and/or video content is not available through the de-multicaster device DM3 153, the application APP1 131 transmits to the other de-multicaster devices present in the local area network LAN 101 a request REQ_CHK so as to determine through which de-multicaster device the audio and/or video content in question can be delivered. Since the responses RSP_CHK contain capacity information, the application APP1 131 can therefrom update the ordered list L and further determine which de-multicaster device able to deliver the audio and/or video content in question has the highest capacity among said other de-multicaster devices. Let's illustratively consider that the de-multicaster device DM3 153 is able to deliver the newly selected audio and/or video content and that the response RSP_CHK includes a corresponding confirmation code.

In a step 516, the application APP1 131 restarts the player PL1 121 for consuming the newly selected audio and/or video content. To do so, the application APP1 131 transmits to the player PL1 121 a message LAUNCH including an identifier of the de-multicaster device DM3 153 (e.g., IP address of the de-multicaster device DM3 153) and information representative of the newly selected audio and/or video content (e.g., an URL path pointing to the newly selected audio and/or video content or preferably to a manifest file representative thereof). Then, in a step 517, the process C_RET is repeated for delivering the newly selected audio and/or video content. Identically as explained in the process C_RET 4100, the de-multicaster device DM3 153 performs a recordation of the start of the new session when receiving the request REQ_M and responding thereto. In a variant, the de-multicaster device DM3 153 detects the start of the new session upon receiving a dedicated message from the application APP1 131. In another variant, the de-multicaster device DM3 153 detects the start of the new session upon receiving a first (in sequence) request REQ_C from the player PL1 121 for the audio and/or video content in question.

In the case where a new session is initiated by the application APP1 131 whereas the predefined time PT2 has expired since the end of the preceding session, availability of processing resources for the new session cannot be ensured by the de-multicaster device DM3 153. The application APP1 131 thus has to select again a de-multicaster among the de-multicaster devices present in the local area network LAN 101, by using an updated version of the ordered list L.

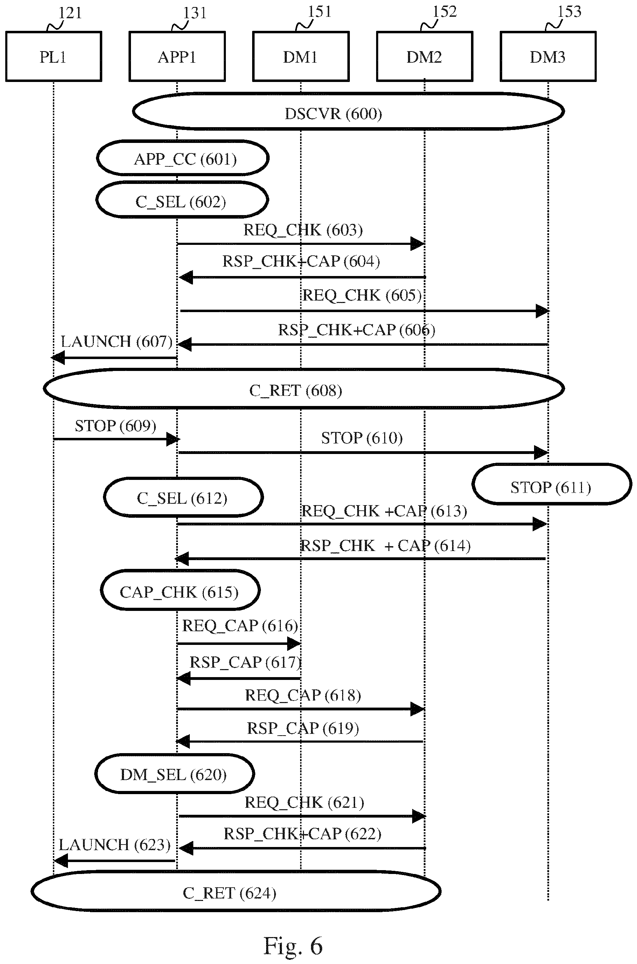

**Fig. 6** schematically represents exchanges occurring in the audio and/or video content delivery system, according to a third embodiment for delivering the audio and/or video content. This third embodiment is a combination of the foregoing first and second embodiments detailed with respect to Figs. 4 and 5. With that way of proceeding, load balancing between the de-multicaster devices present in the local area network LAN 101 remains as stable as possible with a reasonable amount of overhead.

In a step 600, the application APP1 131, the de-multicaster device DM1 151, the de-multicaster device DM2 152 and the de-multicaster device DM3 153 perform the discovery procedure, as already explained with respect to the step 301.

In a step 601, the application APP1 131 performs the process APP_CC as detailed above with respect to Fig. 3. The application APP1 131 thus maintains the ordered list L of the de-multicaster devices present in the local area network LAN 101, according to their capacity information.

In a step 602, the application APP1 131 selects an audio and/or video content to be consumed (process C_SEL).

Next, in a step 603, the application APP1 131 checks whether or not the audio and/or video content to be consumed is made available through the de-multicaster device DM2 152, which is illustratively the de-multicaster device showing the highest remaining capacity according to the ordered list L maintained by the application APP1 131. To do so, the application APP1 131 transmits to the de-multicaster device DM2 152 a request REQ_CHK. The request REQ_CHK is a message including information representative of the selected audio and/or video content and requesting confirmation that the de-multicaster device DM2 152 is able to provide said audio and/or video content to the terminal T1 111. As previously mentioned, each de-multicaster device stores a list of audio and/or video contents made available thereto via the provider network PN 102.

In a step 604, the de-multicaster device DM2 152 transmits a response RSP_CHK to the request REQ_CHK transmitted by the application APP1 131 in the step 603. The response RSP_CHK includes either an error code when the de-multicaster device DM2 152 is not able to deliver the selected audio and/or video content to the terminal T1 111 or a confirmation code otherwise. In addition to including an error code or a confirmation code, the response RSP_CHK further includes capacity information related to the de-multicaster device DM2 152. Let's illustratively consider that the de-multicaster device DM2 152 is not able to deliver the selected audio and/or video content and that the response RSP_CHK includes a corresponding error code; and let's further illustratively consider that the capacity information related to the de-multicaster device DM2 152 has not changed since execution of the process APP_CC 601.

Then, the application APP1 131 checks whether or not the audio and/or video content to be consumed is made available through the de-multicaster device that appears next in the ordered list L. Let's illustratively consider that the de-multicaster device DM3 153 corresponds to the next item in the ordered list L. Therefore, in a step 605, the application APP1 131 checks whether or not the audio and/or video content to be consumed is made available through the de-multicaster device DM3 153, by transmitting thereto a request REQ_CHK. In a step 606, the de-multicaster device DM3 153 transmits a response RSP_CHK to the request REQ_CHK transmitted by the application APP1 131 in the step 605. In addition to including an error code or a confirmation code, the response RSP_CHK further includes capacity information related to the de-multicaster device DM3 153. Let's illustratively consider that the de-multicaster device DM3 153 is able to deliver the selected audio and/or video content and that the response RSP_CHK includes a corresponding confirmation code; and let's further illustratively consider that the capacity information related to the de-multicaster device DM3 153 has not changed since execution of the process APP_CC 601.

In a step 607, the application APP1 131 launches the player PL1 121 for consuming the selected audio and/or video content. To do so, the application APP1 131 transmits to the player PL1 121 a message LAUNCH including an identifier of the de-multicaster device DM3 153 (e.g., IP address of the de-multicaster device DM3 153) and information representative of the selected audio and/or video content (e.g., an URL path pointing to the selected audio and/or video content or preferably to a manifest file representative thereof).

Then, a process C_RET 608 (as detailed with respect to Fig. 4) is performed between the player PL1 121 and the de-multicaster device DM3 153 for delivering the selected audio and/or video content to the terminal T1 111. Identically as explained in the process C_RET 4100, the de-multicaster device DM3 153 performs a recordation of the start of the session when receiving the request REQ_M and responding thereto. When Adaptive Bit Rate is not implemented, there is no manifest file. Thus, in a variant, the de-multicaster device DM3 153 detects the start of the session upon receiving a dedicated message from the application APP1 131. In another variant, the de-multicaster device DM3 153 detects the start of the session upon receiving a first (in sequence) request REQ_C from the player PL1 121 for the audio and/or video content in question

Moreover, once the process C_RET 608 is initiated (for instance after a predefined time PT3 has elapsed), the application APP1 131 updates capacity information related to the de-multicaster device DM3 153 in order to take into account the setting up of the session of the process C_RET 608. An exchange based on a request REQ_CAP and a corresponding response RSP_CAP can be used for doing so (not shown in Fig. 6).

In a step 609, the application APP1 131 detects that the player PL1 121 has ended the session. This may be done by the player PL 121 notifying the application APP1 131 (e.g. by a message STOP) that consumption of the audio and/or video content has ended.

In a step 610, the application APP1 131 notifies (e.g. by a message STOP) the de-multicaster device DM3 153 that consumption of the audio and/or video content has ended. In a variant without notification from the application APP1 131 to the de-multicaster device DM3 153, the de-multicaster device DM3 153 is able to detect that the session for delivering said audio and/or video content to the player PL1 121 has ended, when the predefined time PT1 has elapsed since the latest transmission of a request (either REQ_M or REQ_C) in the process C_RET 608. This triggers, internally to the de-multicaster device DM3 153, a recordation of the stop of the session (step 611).

Despite the end of the session, the de-multicaster device DM3 153 holds in place processing resources for a potential upcoming session for delivering an audio and/or video content to the player PL1 121. The processing resources in question are hold in place for the predefined time PT2. If no subsequent session is started within said predefined time PT2 for delivering an audio and/or video content to the player PL1 121, the de-multicaster device DM3 153 frees the processing resources in question. In the case where a new session is initiated by the application APP1 131 whereas the predefined time PT2 has expired since the end of the preceding session, availability of processing resources for the new session cannot be ensured by the de-multicaster device DM3 153. The application APP1 131 thus has to select again a de-multicaster among the de-multicaster devices present in the local area network LAN 101, by using an updated version of the ordered list L.

Thus, considering that a new session is initiated before expiration of the predefined time PT2, the application APP1 131 selects, in a step 612, the same or another audio and/or video content to be consumed (process C_SEL).

The application APP1 131 checks whether or not the newly selected audio and/or video content to be consumed is made available through the de-multicaster device that was used during the preceding session, namely the de-multicaster device DM3 153. Therefore, in a step 613, the application APP1 131 checks whether or not the newly selected audio and/or video content is made available through the de-multicaster device DM3 153, by transmitting thereto a request REQ_CHK including information representative of the newly selected audio and/or video content and requesting confirmation that the newly selected audio and/or video content is made available. In a step 614, the de-multicaster device DM3 153 transmits a response RSP_CHK to the request REQ_CHK transmitted by the application APP1 131 in the step 613. In addition to including an error code or a confirmation code, the response RSP_CHK further includes capacity information related to the de-multicaster device DM3 153. Let's illustratively consider that the de-multicaster device DM3 153 is able to deliver the newly selected audio and/or video content and that the response RSP_CHK includes a corresponding confirmation code. Let's however illustratively further consider that the capacity information differs from the capacity information that was previously transmitted by the de-multicaster device DM3 153 and that was used for building or updating the current version of the ordered list L.

Therefore, in a step 615, the application APP1 131 checks whether or not the capacity information contained in the response RSP_CHK transmitted by the de-multicaster device DM3 153 shows a capacity change compared with the capacity information that was previously transmitted by the de-multicaster device DM3 153 and that was used for building or updating the current version of the ordered list L. When there is capacity change, the application APP1 131 interrogates the other de-multicaster devices present in the local area network LAN 101 for updating their respective capacity information.

Thus, in a step 616, the application APP1 131 transmits a request REQ_CAP to the de-multicaster device DM1 151. In a step 617, the de-multicaster device DM1 151 transmits a response RSP_CAP to the request REQ_CAP transmitted by the application APP1 131 in the step 616, wherein the response RSP_CAP includes the capacity information requested by the request REQ_CAP. One may note that the requests REQ_CAP are faster to process than the requests REQ_CHK, since the requests REQ_CAP only concern capacity information retrieval whereas the requests REQ_CHK imply parsing a list of available audio and/or video contents, potentially in addition to capacity information retrieval.

In a step 618, the application APP1 131 identically transmits a request REQ_CAP to the de-multicaster device DM2 152. In a step 619, the de-multicaster device DM2 152 transmits a response RSP_CAP to the request REQ_CAP transmitted by the application APP1 131 in the step 618.

Once the application APP1 131 has gathered capacity information of all the de-multicaster devices present in the local area network LAN 101, the application APP1 131 orders the de-multicaster devices according to their capacity information, so as to update the ordered list L. The application APP1 131 selects in a step 620, as default entry point to the audio and/or video content delivery system 100, the de-multicaster device for which the capacity information shows the highest remaining capacity among the de-multicaster devices present in the local area network LAN 101. Let's illustratively consider that the de-multicaster device DM2 152 shows the highest capacity in the ordered list L.

Then, the application APP1 131 checks whether or not the newly selected audio and/or video content is made available through the de-multicaster device DM2 152. To do so, the application APP1 131 transmits to the de-multicaster device DM2 152, in a step 621, a request REQ_CHK including information representative of the newly selected audio and/or video content and requesting confirmation that the newly selected audio and/or video content is made available.

In a step 622, the de-multicaster device DM2 152 transmits a response RSP_CHK to the request REQ_CHK transmitted by the application APP1 131 in the step 621. The response RSP_CHK includes either an error code when the de-multicaster device DM2 152 is not able to deliver the newly selected audio and/or video content to the terminal T1 111 or a confirmation code otherwise. In addition to including an error code or a confirmation code, the response RSP_CHK further includes capacity information related to the de-multicaster device DM2 152. Let's illustratively consider that the de-multicaster device DM2 152 is able to deliver the newly selected audio and/or video content and that the response RSP_CHK includes a corresponding confirmation code.

In a step 623, the application APP1 131 restarts the player PL1 121 for consuming the newly selected audio and/or video content. To do so, the application APP1 131 transmits to the player PL1 121 a message LAUNCH including an identifier of the de-multicaster device DM2 152 (e.g., IP address of the de-multicaster device DM2 152) and information representative of the newly selected audio and/or video content (e.g., an URL path pointing to the newly selected audio and/or video content or preferably to a manifest file representative thereof). Then, in a step 624, the process C_RET is performed between the player PL1 121 and the de-multicaster device DM2 152 for delivering the newly selected audio and/or video content. Identically as explained in the process C_RET 4100, the de-multicaster device DM3 153 performs a recordation of the start of the new session when receiving the request REQ_M and responding thereto. In a variant, the de-multicaster device DM3 153 detects the start of the new session upon receiving a dedicated message from the application APP1 131. In another variant, the de-multicaster device DM3 153 detects the start of the new session upon receiving a first (in sequence) request REQ_C from the player PL1 121 for the audio and/or video content in question.

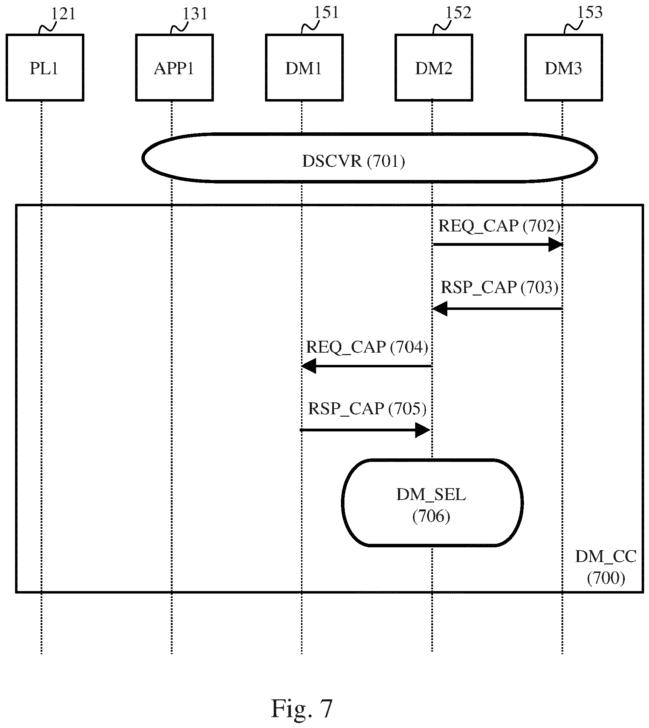

**Fig. 7** schematically represents exchanges occurring in the audio and/or video content delivery system, according to a second embodiment for obtaining de-multicaster capacity information. Compared with Fig. 3, the capacity information is here gathered by a de-multicaster device instead of being gathered by an application. Let's illustratively that the de-multicaster device DM2 152 gathers the capacity information. Gathering the capacity information may be done by any and all de-multicaster devices present in the local area network LAN 101.

In a step 701, the application APP1 131, the de-multicaster device DM1 151, the de-multicaster device DM2 152 and the de-multicaster device DM3 153 perform a discovery procedure (labelled DSCVR). Other terminals, such as terminal T2 112, when present in the local area network LAN 101 also participate in the discovery procedure (via the application APP2 132 for the terminal T2 112). The discovery procedure applies as already described.

In a step 702, the de-multicaster device DM2 152 transmits a request REQ_CAP to the de-multicaster device DM3 153; and in a step 703, the de-multicaster device DM3 153 transmits a response RSP_CAP to the request REQ_CAP transmitted by the de-multicaster device DM2 152 in the step 702, wherein the response RSP_CAP includes the capacity information requested by the request REQ_CAP.

In a step 704, the de-multicaster device DM2 152 identically transmits a request REQ_CAP to the de-multicaster device DM1 151; and in a step 705, the de-multicaster device DM1 151 transmits a response RSP_CAP to the request REQ_CAP transmitted by the de-multicaster device DM2 152 in the step 704.

The de-multicaster device DM2 152 further internally retrieves its own capacity information.

Once the de-multicaster device DM2 152 has gathered capacity information of all de-multicaster devices present in the local area network LAN 101, the de-multicaster device DM2 152 orders the de-multicaster devices according to their capacity information and selects, in a step 706, as default entry point to the audio and/or video content delivery system 100, the de-multicaster device for which the capacity information shows the highest remaining capacity among the de-multicaster devices present in the local area network LAN 101. Ordering according to the capacity information may be done as already described with respect to Fig. 3.

The steps 702 to 706 jointly form a process DM_CC 700 of checking capacity of the de-multicaster devices present in the local area network LAN 101 by the de-multicaster device DM2 152 and of selecting a default entry point to the audio and/or video content delivery system 100.

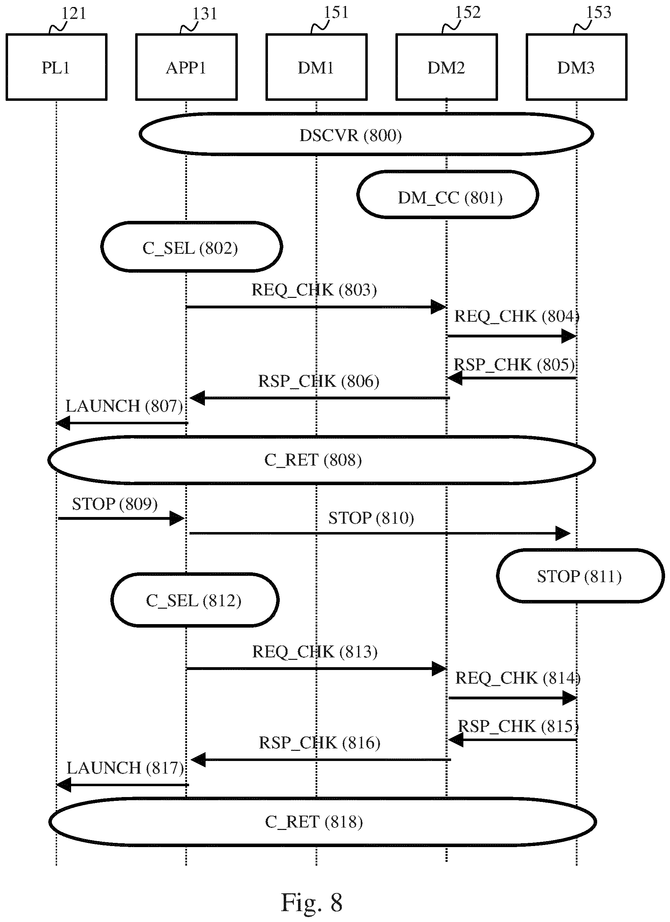

**Fig. 8** schematically represents exchanges occurring in the audio and/or video content delivery system, according to a fourth embodiment for delivering the audio and/or video content. In the scope of this fourth embodiment, the application APP1 131 relies on the de-multicaster device DM2 152 to select the appropriate de-multicaster device for receiving the audio and/or video content. The de-multicaster device on which the application APP1 131 shall rely may be hard-coded in memory of the terminal T1 111. The de-multicaster device on which the application APP1 131 shall rely may be selected by the application APP1 131 following the discovery procedure, by applying a predefined rule.

In a step 800, the application APP1 131, the de-multicaster device DM1 151, the de-multicaster device DM2 152 and the de-multicaster device DM3 153 perform the discovery procedure, as already explained with respect to the step 301.

In a step 801, the de-multicaster device DM2 152 performs the process DM_CC as detailed above with respect to Fig. 7. The de-multicaster device DM2 152 thus maintains the ordered list L of the de-multicaster devices present in the local area network LAN 101, according to their capacity information. Preferably, in order to cope with the situation where the de-multicaster devices do not know on which de-multicaster device the application APP1 131 would rely, all de-multicaster devices present in the local area network LAN 101 perform the process DM_CC and maintain their own version of the ordered list L.

In a step 802, the application APP1 131 selects an audio and/or video content to be consumed (process C_SEL).

Next, in a step 803, the application APP1 131 asks the de-multicaster device DM2 152 whether or not the audio and/or video content to be consumed is made available. To do so, the application APP1 131 transmits to the de-multicaster device DM2 152 a request REQ_CHK. The de-multicaster device DM2 152 consequently determines which de-multicaster device shows the highest remaining capacity according to the ordered list L maintained by the de-multicaster device DM2 152. Let's illustratively consider that the de-multicaster device DM3 153 shows the highest remaining capacity according to the ordered list L.

Then, the de-multicaster device DM2 152 transmits to the de-multicaster device DM3 153 a request REQ_CHK in a step 804. The request REQ_CHK is a message including information representative of the selected audio and/or video content and requesting confirmation that the de-multicaster device DM3 153 is able to provide said audio and/or video content to the terminal T1 111. As already mentioned, each de-multicaster device stores a list of audio and/or video contents made available thereto via the provider network PN 102. In a step 805, the de-multicaster device DM3 153 transmits a response RSP_CHK to the request REQ_CHK transmitted by the de-multicaster device DM2 152 in the step 804. The response RSP_CHK includes either an error code when the de-multicaster device DM3 153 is not able to deliver the selected audio and/or video content to the terminal T1 111 or a confirmation code otherwise. Let's illustratively consider that the de-multicaster device DM3 153 is able to deliver the selected audio and/or video content and that the response RSP_CHK includes a corresponding confirmation code.

In a step 806, the de-multicaster device DM2 152 transmits to the application APP1 131 a response RSP_CHK to the request REQ_CHK transmitted by the application APP1 131 in the step 803. The response RSP_CHK indicates that the de-multicaster device DM3 153 is able to deliver the selected audio and/or video content and includes a corresponding confirmation code.

In a step 807, the application APP1 131 launches the player PL1 121 for consuming the selected audio and/or video content. To do so, the application APP1 131 transmits to the player PL1 121 a message LAUNCH including an identifier of the de-multicaster device DM3 153 (e.g., IP address of the de-multicaster device DM3 153) and information representative of the selected audio and/or video content (e.g., an URL path pointing to the selected audio and/or video content or preferably to a manifest file representative thereof).

Then, a process C_RET 808 (as detailed with respect to Fig. 4) is performed between the player PL1 121 and the de-multicaster device DM3 153 for delivering the selected audio and/or video content to the terminal T1 111. Identically as explained in the process C_RET 4100, the de-multicaster device DM3 153 performs a recordation of the start of the session when receiving the request REQ_M and responding thereto. When Adaptive Bit Rate is not implemented, there is no manifest file. Thus, in a variant, the de-multicaster device DM3 153 detects the start of the session upon receiving a dedicated message from the application APP1 131. In another variant, the de-multicaster device DM3 153 detects the start of the session upon receiving a first (in sequence) request REQ_C from the player PL1 121 for the audio and/or video content in question

In a step 809, the application APP1 131 detects that the player PL1 121 has ended the session. This may be done by the player PL 121 notifying the application APP1 131 (e.g. by a message STOP) that consumption of the audio and/or video content has ended.

In a step 810, the application APP1 131 notifies (e.g. by a message STOP) the multicaster device DM3 153 that consumption of the audio and/or video content has ended. In a variant without notification from the application APP1 131 to the de-multicaster device DM3 153, the de-multicaster device DM3 153 is able to detect that the session for delivering said audio and/or video content to the player PL1 121 has ended, when the predefined time PT1 has elapsed since the latest transmission of a request (either REQ_M or REQ_C) from the player PL1 121 in the process C_RET 808. This triggers, internally to the de-multicaster device DM3 153, a recordation of the stop of the session (step 811).

Despite the end of the session, the de-multicaster device DM3 153 holds in place processing resources for a potential upcoming session for delivering an audio and/or video content to the player PL1 121. The processing resources in question are hold in place for the predefined time PT2. If no subsequent session is started within said predefined time PT2 for delivering an audio and/or video content to the player PL1 121, the de-multicaster device DM3 153 frees the processing resources in question.

Thus, considering that a new session is initiated before expiration of the predefined time PT2, the application APP1 131 selects, in a step 812, the same or another audio and/or video content to be consumed (process C_SEL).

Then, the application APP1 131 asks the de-multicaster device DM2 152 whether or not the newly selected audio and/or video content is made available. To do so, in a step 813, the application APP1 131 transmits to the de-multicaster device DM2 152 a request REQ_CHK including information representative of the newly selected audio and/or video content and requesting confirmation that the newly selected audio and/or video content is made available. Consequently, the de-multicaster device DM2 152 checks whether or not the newly selected audio and/or video content to be consumed is made available through the de-multicaster device that was used during the preceding session for the terminal T1 111, namely the de-multicaster device DM3 153. Therefore, in a step 814, the de-multicaster device DM2 152 checks whether or not the newly selected audio and/or video content is made available through the de-multicaster device DM3 153, by transmitting thereto a request REQ_CHK. In a step 815, the de-multicaster device DM3 153 transmits a response RSP_CHK to the request REQ_CHK transmitted by the de-multicaster device DM2 152 in the step 814. Let's illustratively consider that the de-multicaster device DM3 153 is able to deliver the newly selected audio and/or video content and that the response RSP_CHK includes a corresponding confirmation code.

In a step 816, the de-multicaster device DM2 152 transmits to the application APP1 131 a response RSP_CHK to the request REQ_CHK transmitted by the application APP1 131 in the step 813. The response RSP_CHK indicates that the de-multicaster device DM3 153 is able to deliver the selected audio and/or video content and includes a corresponding confirmation code.

In a step 817, the application APP1 131 restarts the player PL1 121 for consuming the newly selected audio and/or video content. To do so, the application APP1 131 transmits to the player PL1 121 a message LAUNCH including an identifier of the de-multicaster device DM3 153 (e.g., IP address of the de-multicaster device DM3 153) and information representative of the newly selected audio and/or video content (e.g., an URL path pointing to the newly selected audio and/or video content or preferably to a manifest file representative thereof). Then, in a step 818, the process C_RET is repeated for delivering the newly selected audio and/or video content. Identically as explained in the process C_RET 4100, the de-multicaster device DM3 153 performs a recordation of the start of the new session when receiving the request REQ_M and responding thereto. In a variant, the de-multicaster device DM3 153 detects the start of the new session upon receiving a dedicated message from the application APP1 131. In another variant, the de-multicaster device DM3 153 detects the start of the new session upon receiving a first (in sequence) request REQ_C (as detailed below) from the player PL1 121 for the audio and/or video content in question

In the case where a new session is initiated by the application APP1 131 whereas the predefined time PT2 has expired since the end of the preceding session, availability of processing resources for the new session cannot be ensured by the de-multicaster device DM3 153. The de-multicaster device DM2 152 thus has to select again a de-multicaster among the de-multicaster devices present in the local area network LAN 101, by using an updated version of the ordered list L.

Interrogating the de-multicaster devices present in the local area network LAN 101 using the process DM_CC may be done on a regular basis by the de-multicaster in question in order to keep the best accurate view of their actual capability information. The de-multicaster in question updates the ordered list L when the process DM_CC reveals that capacity information has changed for at least one de-multicaster device present in the local area network LAN 101.

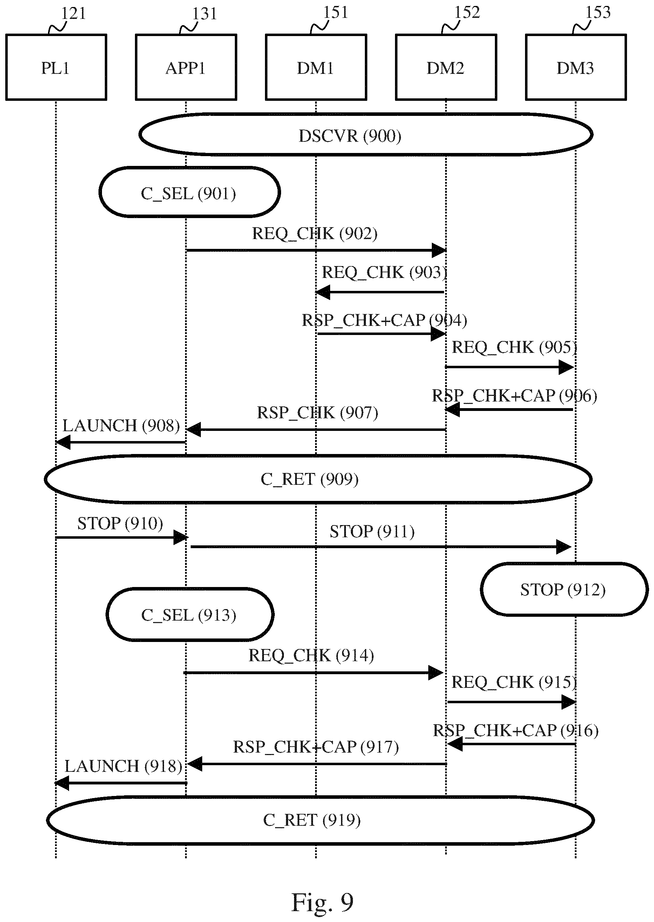

**Fig. 9** schematically represents exchanges occurring in the audio and/or video content delivery system, according to a fifth embodiment for delivering the audio and/or video content. In the scope of this fifth embodiment, the application APP1 131 also relies on the de-multicaster device DM2 152 to select the appropriate de-multicaster device for receiving the audio and/or video content. Furthermore, in the fifth embodiment, obtaining capacity information from the de-multicaster devices is performed at the same time as checking availability of an audio and/or video content before the de-multicaster devices. Overhead related to message exchanges is thus limited.

In a step 900, the application APP1 131, the de-multicaster device DM1 151, the de-multicaster device DM2 152 and the de-multicaster device DM3 153 perform the discovery procedure, as already explained with respect to the step 301.

In a step 901, the application APP1 131 selects an audio and/or video content to be consumed (process C_SEL).

Next, in a step 902, the application APP1 131 asks the de-multicaster device DM2 152 whether or not the audio and/or video content to be consumed is made available. To do so, the application APP1 131 transmits to the de-multicaster device DM2 152 a request REQ_CHK including information representative of the selected audio and/or video content and requesting confirmation that the selected audio and/or video content is made available.

In this fifth embodiment for delivering the audio and/or video content, each response RSP_CHK to a request REQ_CHK transmitted by one de-multicaster device to another de-multicaster device includes capacity information concerning the de-multicaster device in question, as detailed hereafter.

Thus, in a step 903, the de-multicaster device DM2 152 transmits to the de-multicaster device DM1 151 a request REQ_CHK including information representative of the selected audio and/or video content and requesting confirmation that the selected audio and/or video content is made available. As already explained, each de-multicaster device stores a list of audio and/or video contents made available thereto via the provider network PN 102.

Then, in a step 904, the de-multicaster device DM1 151 transmits a response RSP_CHK to the request REQ_CHK transmitted by the de-multicaster device DM2 152 in the step 903. In addition to including an error code or a confirmation code, the response RSP_CHK further includes capacity information related to the de-multicaster device DM1 151 (as already addressed with respect to Fig. 7). Let's illustratively consider that the de-multicaster device DM1 151 is able to deliver the selected audio and/or video content and that the response RSP_CHK includes a corresponding confirmation code.

In a step 905, the de-multicaster device DM2 152 also transmits to the de-multicaster device DM3 153 a request REQ_CHK for the selected audio and/or video content. Then, in a step 906, the de-multicaster device DM3 153 transmits a response RSP_CHK to the request REQ_CHK transmitted by the de-multicaster device DM2 152 in the step 905. In addition to including an error code or a confirmation code, the response RSP_CHK further includes capacity information related to the de-multicaster device DM3 153. Let's illustratively consider that the de-multicaster device DM3 153 is able to deliver the selected audio and/or video content and that the response RSP_CHK includes a corresponding confirmation code.

The de-multicaster device DM2 152 further internally retrieves its own capacity information.

Once the de-multicaster device DM2 152 has gathered capacity information of all the de-multicaster devices present in the local area network LAN 101, the de-multicaster device DM2 152 orders the de-multicaster devices according to their capacity information so as to build the ordered list L already mentioned with respect to Fig. 3. The de-multicaster device DM2 152 selects the de-multicaster device that shows the highest capacity among the de-multicaster devices present in the local area network LAN 101 and that is able to deliver the audio and/or video content in question. Let's illustratively consider that the de-multicaster device DM2 152 selects in accordance the de-multicaster device DM3 153.

Then, in a step 907, the de-multicaster device DM2 152 transmits to the application APP1 131 a response RSP_CHK to the request REQ_CHK transmitted by the application APP1 131 in the step 902. The response RSP_CHK indicates that the de-multicaster device DM3 153 is able to deliver the selected audio and/or video content and includes a corresponding confirmation code. No need to include capacity information in this response RSP_CHK, since the application APP1 131 relies on the de-multicaster device DM2 152 for selecting the appropriate de-multicaster device for delivering the audio and/or video content.

In a step 908, the application APP1 131 launches the player PL1 121 for consuming the selected audio and/or video content. To do so, the application APP1 131 transmits to the player PL1 121 a message LAUNCH including an identifier of the de-multicaster device DM3 153 (e.g., IP address of the de-multicaster device DM3 153) and information representative of the selected audio and/or video content (e.g., an URL path pointing to the selected audio and/or video content or preferably to a manifest file representative thereof).

Then, a process C_RET 909 (as detailed with respect to Fig. 4) is performed between the player PL1 121 and the de-multicaster device DM3 153 for delivering the selected audio and/or video content to the terminal T1 111. Identically as explained in the process C_RET 4100, the de-multicaster device DM3 153 performs a recordation of the start of the session when receiving the request REQ_M and responding thereto. When Adaptive Bit Rate is not implemented, there is no manifest file. Thus, in a variant, the de-multicaster device DM3 153 detects the start of the session upon receiving a dedicated message from the application APP1 131. In another variant, the de-multicaster device DM3 153 detects the start of the session upon receiving a first (in sequence) request REQ_C from the player PL1 121 for the audio and/or video content in question

In a step 910, the application APP1 131 detects that the player PL1 121 has ended the session. This may be done by the player PL1 121 notifying the application APP1 131 (e.g. by a message STOP) that consumption of the audio and/or video content has ended.

In a step 911, the application APP1 131 notifies (e.g. by a message STOP) the de-multicaster device DM3 153 that consumption of the audio and/or video content has ended. In a variant without notification from the application APP1 131, the de-multicaster device DM3 153 is able to detect that the session for delivering said audio and/or video content to the player PL1 121 has ended, when the predefined time PT1 has elapsed since the latest transmission of a request (either REQ_M or REQ_C) in the process C_RET 909. This triggers, internally to the de-multicaster device DM3 153, a recordation of the stop of the session (step 912).

Despite the end of the session, the de-multicaster device DM3 153 holds in place, during the predefined time PT2, processing resources for a potential upcoming session for delivering an audio and/or video content to the player PL1 121. If no subsequent session is started within said predefined time PT2 for delivering an audio and/or video content to the player PL1 121, the de-multicaster device DM3 153 frees the processing resources in question.

Thus, considering that a new session is initiated before expiration of the predefined time PT2, the application APP1 131 selects, in a step 913, the same or another audio and/or video content to be consumed (process C_SEL).

Then, the application APP1 131 asks the de-multicaster device DM2 152 whether or not the newly selected audio and/or video content is made available. To do so, in a step 914, the application APP1 131 transmits to the de-multicaster device DM2 152 a request REQ_CHK including information representative of the newly selected audio and/or video content and requesting confirmation that the newly selected audio and/or video content is made available. Consequently, the de-multicaster device DM2 152 checks whether or not the newly selected audio and/or video content to be consumed is made available through the de-multicaster device that was used during the preceding session for the terminal T1 111, namely the de-multicaster device DM3 153. Therefore, in a step 915, the de-multicaster device DM2 152 checks whether or not the newly selected audio and/or video content is made available through the de-multicaster device DM3 153, by transmitting thereto a request REQ_CHK. In a step 916, the de-multicaster device DM3 153 transmits a response RSP_CHK to the request REQ_CHK transmitted by the de-multicaster device DM2 152 in the step 915. In addition to including an error code or a confirmation code, the response RSP_CHK further includes capacity information related to the de-multicaster device DM3 153. Let's illustratively consider that the de-multicaster device DM3 153 is able to deliver the selected audio and/or video content and that the response RSP_CHK includes a corresponding confirmation code.

In a step 917, the de-multicaster device DM2 152 transmits to the application APP1 131 a response RSP_CHK to the request REQ_CHK transmitted by the application APP1 131 in the step 914. The response RSP_CHK indicates that the de-multicaster device DM3 153 is able to deliver the selected audio and/or video content and includes a corresponding confirmation code.

In a step 918, the application APP1 131 restarts the player PL1 121 for consuming the newly selected audio and/or video content. To do so, the application APP1 131 transmits to the player PL1 121 a message LAUNCH including an identifier of the de-multicaster device DM3 153 (e.g., IP address of the de-multicaster device DM3 153) and information representative of the newly selected audio and/or video content (e.g., an URL path pointing to the newly selected audio and/or video content or preferably to a manifest file representative thereof). Then, in a step 917, the process C_RET is repeated for delivering the newly selected audio and/or video content. Identically as explained in the process C_RET 4100, the de-multicaster device DM3 153 performs a recordation of the start of the new session when receiving the request REQ_M and responding thereto. In a variant, the de-multicaster device DM3 153 detects the start of the new session upon receiving a dedicated message from the application APP1 131. In another variant, the de-multicaster device DM3 153 detects the start of the new session upon receiving a first (in sequence) request REQ_C from the player PL1 121 for the audio and/or video content in question.

In the case where a new session is initiated by the application APP1 131 whereas the predefined time PT2 has expired since the end of the preceding session, availability of processing resources for the new session cannot be ensured by the de-multicaster device DM3 153. The de-multicaster device DM2 152 thus has to select again a de-multicaster among the de-multicaster devices present in the local area network LAN 101, by using an updated version of the ordered list L.

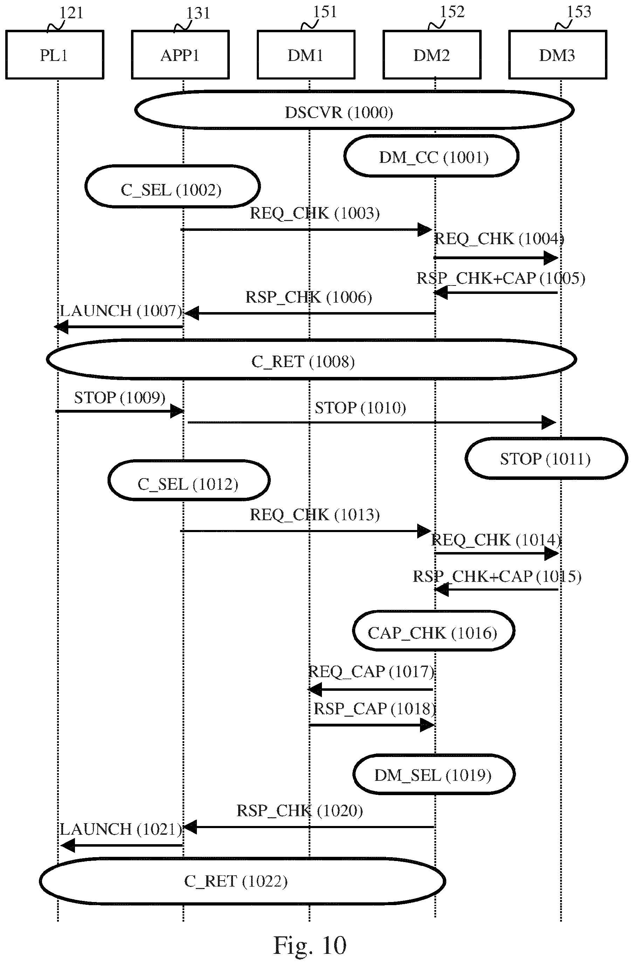

**Fig. 10** schematically represents exchanges occurring in the audio and/or video content delivery system, according to a sixth embodiment for delivering the audio and/or video content. In the scope of this sixth embodiment, the application APP1 131 also relies on the de-multicaster device DM2 152 to select the appropriate de-multicaster device for receiving the audio and/or video content. Furthermore, this sixth embodiment is a combination of the foregoing fourth and fifth embodiments detailed with respect to Figs. 8 and 9. With that way of proceeding, load balancing between the de-multicaster devices present in the local area network LAN 101 remains as stable as possible with a reasonable amount of overhead.

In a step 1000, the application APP1 131, the de-multicaster device DM1 151, the de-multicaster device DM2 152 and the de-multicaster device DM3 153 perform the discovery procedure, as already explained with respect to the step 301.

In a step 1001, the de-multicaster device DM2 152 performs the process DM_CC as detailed above with respect to Fig. 7. The de-multicaster device DM2 152 thus maintains the ordered list L of the de-multicaster devices present in the local area network LAN 101, according to their capacity information. Preferably, in order to cope with the situation where the de-multicaster devices do not know on which de-multicaster device the application APP1 131 would rely, all de-multicaster devices present in the local area network LAN 101 perform the process DM_CC and maintain their own version of the ordered list L.

In a step 1002, the application APP1 131 selects an audio and/or video content to be consumed (process C_SEL).

Next, in a step 1003, the application APP1 131 asks the de-multicaster device DM2 152 whether or not the audio and/or video content to be consumed is made available. To do so, the application APP1 131 transmits to the de-multicaster device DM2 152 a request REQ_CHK. The de-multicaster device DM2 152 consequently determines which de-multicaster device shows the highest remaining capacity according to the ordered list L maintained by the de-multicaster device DM2 152. Let's illustratively consider that the de-multicaster device DM3 153 shows the highest remaining capacity according to the ordered list L.

Then, the de-multicaster device DM2 152 transmits to the de-multicaster device DM3 153 a request REQ_CHK in a step 1004. The request REQ_CHK is a message including information representative of the selected audio and/or video content and requesting confirmation that the de-multicaster device DM3 153 is able to provide said audio and/or video content to the terminal T1 111. As already mentioned, each de-multicaster device stores a list of audio and/or video contents made available thereto via the provider network PN 102. In a step 1005, the de-multicaster device DM3 153 transmits a response RSP_CHK to the request REQ_CHK transmitted by the de-multicaster device DM2 152 in the step 1004. The response RSP_CHK includes either an error code when the de-multicaster device DM3 153 is not able to deliver the selected audio and/or video content to the terminal T1 111 or a confirmation code otherwise. The response RSP_CHK further includes capacity information related to the de-multicaster device DM3 153. Let's illustratively consider that the de-multicaster device DM3 153 is able to deliver the selected audio and/or video content and that the response RSP_CHK includes a corresponding confirmation code; and let's further illustratively consider that the capacity information related to the de-multicaster device DM3 153 has not changed since execution of the process DM_CC 1001.

In a step 1006, the de-multicaster device DM2 152 transmits to the application APP1 131 a response RSP_CHK to the request REQ_CHK transmitted by the application APP1 131 in the step 1003. The response RSP_CHK indicates that the de-multicaster device DM3 153 is able to deliver the selected audio and/or video content and includes a corresponding confirmation code. No need to include capacity information in this response RSP_CHK, since the application APP1 131 relies on the de-multicaster device DM2 152 for selecting the appropriate de-multicaster device for delivering the audio and/or video content.

In a step 1007, the application APP1 131 launches the player PL1 121 for consuming the selected audio and/or video content. To do so, the application APP1 131 transmits to the player PL1 121 a message LAUNCH including an identifier of the de-multicaster device DM3 153 (e.g., IP address of the de-multicaster device DM3 153) and information representative of the selected audio and/or video content (e.g., an URL path pointing to the selected audio and/or video content or preferably to a manifest file representative thereof).

Then, a process C_RET 1008 (as detailed with respect to Fig. 4) is performed between the player PL1 121 and the de-multicaster device DM3 153 for delivering the selected audio and/or video content to the terminal T1 111. Identically as explained in the process C_RET 4100, the de-multicaster device DM3 153 performs a recordation of the start of the session when receiving the request REQ_M and responding thereto. When Adaptive Bit Rate is not implemented, there is no manifest file. Thus, in a variant, the de-multicaster device DM3 153 detects the start of the session upon receiving a dedicated message from the application APP1 131. In another variant, the de-multicaster device DM3 153 detects the start of the session upon receiving a first (in sequence) request REQ_C from the player PL1 121 for the audio and/or video content in question

Moreover, once the process C_RET 1008 is initiated (for instance after the predefined time PT3 has elapsed), the de-multicaster device DM2 152 updates capacity information related to the de-multicaster device DM3 153 in order to take into account the setting up of the session of the process C_RET 1008. An exchange based on a request REQ_CAP and a corresponding response RSP_CAP can be used for doing so (not shown in Fig. 10).

In a step 1009, the application APP1 131 detects that the player PL1 121 has ended the session. This may be done by the player PL1 121 notifying the application APP1 131 (e.g. by a message STOP) that consumption of the audio and/or video content has ended.

In a step 1010, the application APP1 131 notifies (e.g. by a message STOP) the de-multicaster device DM3 153 that consumption of the audio and/or video content has ended. In a variant without notification from the application APP1 131, the de-multicaster device DM3 153 is able to detect that the session for delivering said audio and/or video content to the player PL1 121 has ended, when the predefined time PT1 has elapsed since the latest transmission of a request (either REQ_M or REQ_C) in the process C_RET 1008. This triggers, internally to the de-multicaster device DM3 153, a recordation of the stop of the session (step 1011).

Despite the end of the session, the de-multicaster device DM3 153 holds in place processing resources for a potential upcoming session for delivering an audio and/or video content to the player PL1 121. The processing resources in question are hold in place for the predefined time PT2. If no subsequent session is started within said predefined time PT2 for delivering an audio and/or video content to the player PL1 121, the de-multicaster device DM3 153 frees the processing resources in question. In the case where a new session is initiated by the application APP1 131 whereas the predefined time PT2 has expired since the end of the preceding session, availability of processing resources for the new session cannot be ensured by the de-multicaster device DM3 153. The de-multicaster device DM2 152 thus has to select again a de-multicaster among the de-multicaster devices present in the local area network LAN 101, by using an updated version of the ordered list L.

Thus, considering that a new session is initiated before expiration of the predefined time PT2, the application APP1 131 selects, in a step 1012, the same or another audio and/or video content to be consumed (process C_SEL).

Then, the application APP1 131 asks the de-multicaster device DM2 152 whether or not the newly selected audio and/or video content is made available. To do so, in a step 1013, the application APP1 131 transmits to the de-multicaster device DM2 152 a request REQ_CHK including information representative of the newly selected audio and/or video content and requesting confirmation that the newly selected audio and/or video content is made available. Consequently, the de-multicaster device DM2 152 checks whether or not the newly selected audio and/or video content to be consumed is made available through the de-multicaster device that was used during the preceding session for the terminal T1 111, namely the de-multicaster device DM3 153. Therefore, in a step 1014, the de-multicaster device DM2 152 checks whether or not the newly selected audio and/or video content is made available through the de-multicaster device DM3 153, by transmitting thereto a request REQ_CHK. In a step 1015, the de-multicaster device DM3 153 transmits a response RSP_CHK to the request REQ_CHK transmitted by the de-multicaster device DM2 152 in the step 1014. The response RSP_CHK further includes capacity information related to the de-multicaster device DM3 153. Let's illustratively consider that the de-multicaster device DM3 153 is able to deliver the selected audio and/or video content and that the response RSP_CHK includes a corresponding confirmation code; but let's further illustratively consider that the capacity information related to the de-multicaster device DM3 153 has changed since execution of the process C_RET 1008.

Therefore, in a step 1016, the de-multicaster device DM2 152 checks whether or not the capacity information contained in the response RSP_CHK transmitted by the de-multicaster device DM3 153 shows a capacity change compared with the capacity information that was previously transmitted by the de-multicaster device DM3 153 and that was used for building or updating the current version of the ordered list L. When there is capacity change, the de-multicaster device DM2 152 interrogates the other de-multicaster devices present in the local area network LAN 101 for updating their respective capacity information.

Thus, in a step 1017, the de-multicaster device DM2 152 transmits a request REQ_CAP to the de-multicaster device DM1 151. In a step 1018, the de-multicaster device DM1 151 transmits a response RSP_CAP to the request REQ_CAP transmitted by the de-multicaster device DM2 152 in the step 1017, wherein the response RSP_CAP includes the capacity information requested by the request REQ_CAP.

Once the de-multicaster device DM2 152 has gathered capacity information of all the de-multicaster devices present in the local area network LAN 101, the de-multicaster device DM2 152 orders the de-multicaster devices according to their capacity information, so as to update the ordered list L. The de-multicaster device DM2 152 selects in a step 1019, as default entry point to the audio and/or video content delivery system 100, the de-multicaster device for which the capacity information shows the highest remaining capacity among the de-multicaster devices present in the local area network LAN 101. In the case where the selected de-multicaster device is not the de-multicaster device DM2 152, the de-multicaster device DM2 152 checks whether or not the newly selected audio and/or video content is made available through the selected de-multicaster device thanks to a request REQ_CHK, as already described with respect to Fig. 6. If not, the de-multicaster device DM2 152 considers the next de-multicaster device in the ordered list L. Let's illustratively consider that the de-multicaster device DM2 152 shows the highest capacity in the ordered list L; and let's further consider that the de-multicaster device DM2 152 is able to deliver the newly selected audio and/or video content.

Then, in a step 1020, the de-multicaster device DM2 152 transmits to the application APP1 131 a response RSP_CHK to the request REQ_CHK transmitted by the application APP1 131 in the step 1013. The response RSP_CHK indicates that the de-multicaster device DM2 152 is able to deliver the selected audio and/or video content and includes a corresponding confirmation code. No need to include capacity information in this response RSP_CHK, since the application APP1 131 relies on the de-multicaster device DM2 152 for selecting the appropriate de-multicaster device for delivering the audio and/or video content.

In a step 1021, the application APP1 131 restarts the player PL1 121 for consuming the newly selected audio and/or video content. To do so, the application APP1 131 transmits to the player PL1 121 a message LAUNCH including an identifier of the de-multicaster device DM2 152 (e.g., IP address of the de-multicaster device DM2 152) and information representative of the newly selected audio and/or video content (e.g., an URL path pointing to the newly selected audio and/or video content or preferably to a manifest file representative thereof). Then, in a step 1022, the process C_RET is performed between the player PL1 121 and the de-multicaster device DM2 152 for delivering the newly selected audio and/or video content. Identically as explained in the process C_RET 4100, the de-multicaster device DM2 152 performs a recordation of the start of the new session when receiving the request REQ_M and responding thereto. In a variant, the de-multicaster device DM3 153 detects the start of the new session upon receiving a dedicated message from the application APP1 131. In another variant, the de-multicaster device DM3 153 detects the start of the new session upon receiving a first (in sequence) request REQ_C from the player PL1 121 for the audio and/or video content in question.

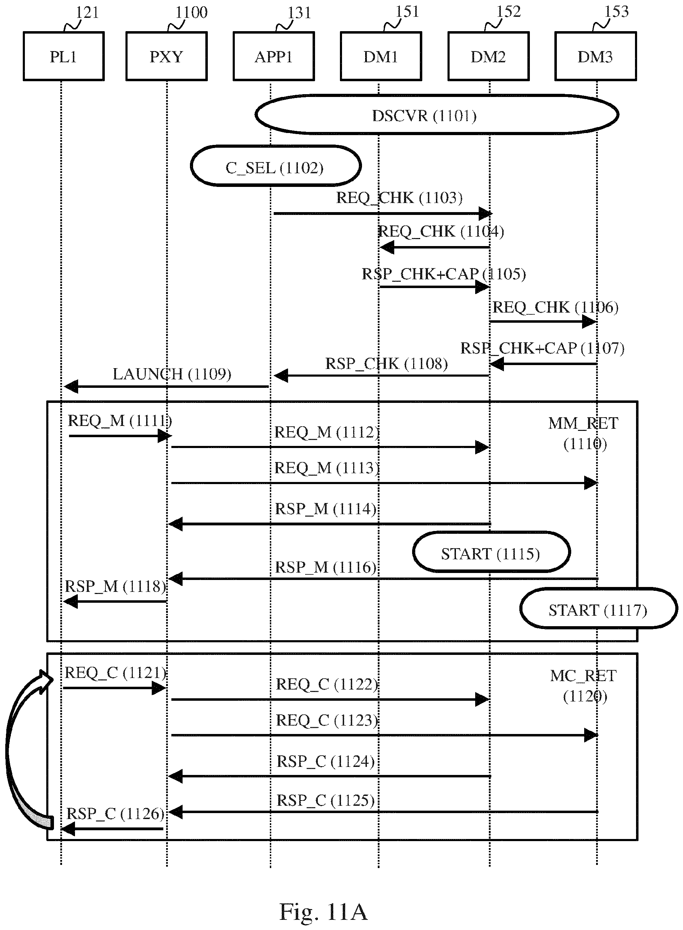

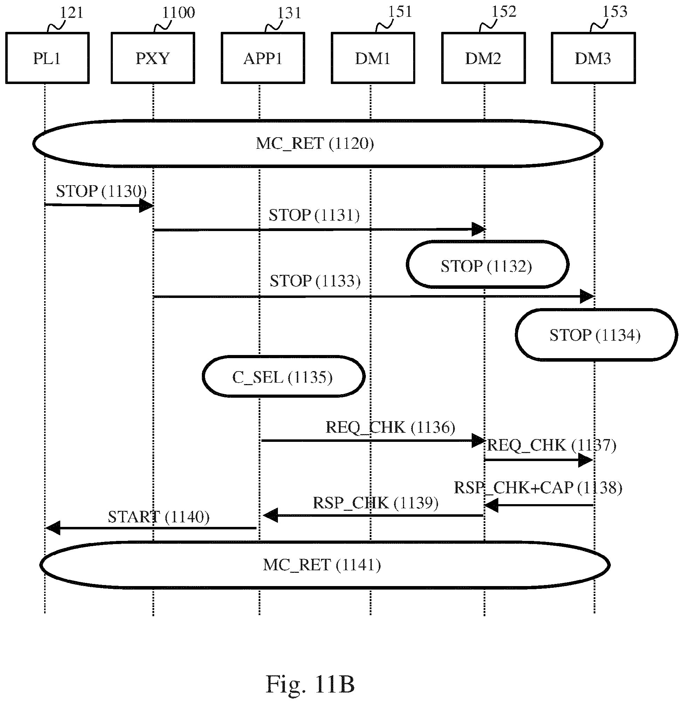

**Figs. 11A** **and** **11B** jointly represent schematically exchanges occurring in the audio and/or video content delivery system, according to a seventh embodiment for delivering the audio and/or video content. In this seventh embodiment, multipath is considered, which means that an audio and/or video content to be consumed is obtained through plural de-multicaster devices. In the scope of this seventh embodiment, the application APP1 131 also relies on the de-multicaster device DM2 152 to select the appropriate de-multicaster device for receiving the audio and/or video content.

In order to implement multipath delivery, the local area network LAN 101 further includes a proxy device PXY 1100. The proxy device PXY 1100 may be a device distinct from the terminal T1 111 and from any one of the de-multicaster device DM1 151, DM2 152, DM3 153. The proxy device PXY 1100 may be, in a variant, included in the terminal T1 111. The proxy device PXY 1100 may be, in another variant, included in one of the de-multicaster device DM1 151, DM2 152, DM3 153.

In a step 1101, the application APP1 131, the de-multicaster device DM1 151, the de-multicaster device DM2 152 and the de-multicaster device DM3 153 perform the discovery procedure, as already explained with respect to the step 301. The proxy device PXY 1100 may participate in the discovery procedure, in order to announce its presence in the local area network LAN 101.

In a step 1102, the application APP1 131 selects an audio and/or video content to be consumed (process C_SEL).

Next, in a step 1103, the application APP1 131 asks the de-multicaster device DM2 152 whether or not the audio and/or video content to be consumed is made available. To do so, the application APP1 131 transmits to the de-multicaster device DM2 152 a request REQ_CHK including information representative of the selected audio and/or video content and requesting confirmation that the selected audio and/or video content is made available.

In this seventh embodiment for delivering the audio and/or video content (as in the fifth embodiment in Fig. 9), each response RSP_CHK to a request REQ_CHK transmitted by one de-multicaster device to another de-multicaster device includes capacity information concerning the de-multicaster device in question, as detailed hereafter.

Thus, in a step 1104, the de-multicaster device DM2 152 transmits to the de-multicaster device DM1 151 a request REQ_CHK including information representative of the selected audio and/or video content and requesting confirmation that the selected audio and/or video content is made available. As already explained, each de-multicaster device stores a list of audio and/or video contents made available thereto via the provider network PN 102.

Then, in a step 1105, the de-multicaster device DM1 151 transmits a response RSP_CHK to the request REQ_CHK transmitted by the de-multicaster device DM2 152 in the step 1104. In addition to including an error code or a confirmation code, the response RSP_CHK further includes capacity information related to the de-multicaster device DM1 151 (as already addressed with respect to Fig. 7). Let's illustratively consider that the de-multicaster device DM1 151 is able to deliver the selected audio and/or video content and that the response RSP_CHK includes a corresponding confirmation code.

In a step 1106, the de-multicaster device DM2 152 also transmits to the de-multicaster device DM3 153 a request REQ_CHK for the selected audio and/or video content. Then, in a step 1107, the de-multicaster device DM3 153 transmits a response RSP_CHK to the request REQ_CHK transmitted by the de-multicaster device DM2 152 in the step 1106. In addition to including an error code or a confirmation code, the response RSP_CHK further includes capacity information related to the de-multicaster device DM3 153. Let's illustratively consider that the de-multicaster device DM3 153 is able to deliver the selected audio and/or video content and that the response RSP_CHK includes a corresponding confirmation code.

The de-multicaster device DM2 152 further internally retrieves its own capacity information.

Once the de-multicaster device DM2 152 has gathered capacity information of all the de-multicaster devices present in the local area network LAN 101, the de-multicaster device DM2 152 orders the de-multicaster devices according to their capacity information so as to build the ordered list L already mentioned with respect to Fig. 3.

The de-multicaster device DM2 152 selects a predetermined number N (N > 1) of de-multicaster devices that show the highest capacities among the de-multicaster devices present in the local area network LAN 101 and that are able to deliver the audio and/or video content in question. Let's illustratively consider that N = 2 and that the de-multicaster device DM2 152 selects in accordance the de-multicaster device DM2 152 and the de-multicaster device DM3 153.

Then, in a step 1108, the de-multicaster device DM2 152 transmits to the application APP1 131 a response RSP_CHK to the request REQ_CHK transmitted by the application APP1 131 in the step 1103. The response RSP_CHK indicates that the de-multicaster device DM2 152 and the de-multicaster device DM3 153 are able to deliver the selected audio and/or video content, and the response RSP_CHK includes a corresponding confirmation code. No need to include capacity information in this response RSP_CHK, since the application APP1 131 relies on the de-multicaster device DM2 152 for selecting the appropriate de-multicaster devices for delivering the audio and/or video content.

It can be noted that, in the case where the application APP1 131 is not multipath-aware, the application APP1 131 only considers the de-multicaster device cited first in the response RSP_CHK and withdraw information related to any other de-multicaster device which is contained in the response RSP_CHK.

In a step 1109, the application APP1 131 launches the player PL1 121 for consuming the selected audio and/or video content. To do so, the application APP1 131 transmits to the player PL1 121 a message LAUNCH including an identifier of the proxy device PXY 1100 (e.g., IP address of the proxy device PXY 1100) and information representative of the selected audio and/or video content (e.g., an URL path pointing to the selected audio and/or video content or preferably to a manifest file representative thereof). The message LAUNCH further includes (e.g. as inline parameters) an identifier of each de-multicaster device (e.g., IP address of the de-multicaster in question) to be used for the multipath delivery of the selected audio and/or video content. In our example, the identifiers of the de-multicaster device DM2 152 and of the de-multicaster device DM3 153 (e.g., their IP addresses) are thus provided, as e.g. inline parameters, in the message LAUNCH in the step 1109.

Then, the player PL1 121 communicates with the proxy device PXY 1100 in order to receive the segments of the audio and/or video content in question, the proxy device PXY 1100 transparently (from the standpoint of the player PL1 121) managing the multipath delivery with the de-multicaster device DM2 152 and the de-multicaster device DM3 153.

Therefore, in a step 1111, the player PL1 121 transmits to the proxy device PXY 1100 (according to the content of the LAUNCH message) a request REQ_M, so as to obtain in response a manifest file of the selected audio and/or video content. The request REQ_M therefore contains information representative of the selected audio and/or video content (e.g., an URL path pointing to the manifest file as provided in the LAUNCH message). Then, in a step 1112, the proxy device PXY 1100 sends such a request REQ_M to the de-multicaster device DM2 152 and, in a step 1113, such a request REQ_M to the de-multicaster device DM3 153. Consequently, in a step 1114, the de-multicaster device DM2 152 confirms, to the proxy device PXY 1100, availability of the selected audio and/or video content, by sending the requested manifest file. And, in a step 1116, the de-multicaster device DM3 153 confirms, to the proxy device PXY 1100, availability of the selected audio and/or video content, by sending the requested manifest file. Then, in a step 1118, the proxy device PXY 1100 confirms, to the player PL1 121, availability of the selected audio and/or video content, by sending the requested manifest file. Receiving the request REQ_M and responding thereto triggers, internally to the de-multicaster device DM2 152 (step 1115) and to the de-multicaster device DM3 153, a recordation of the start of the session (step 1117). One may here note that the proxy device PXY 1100 needs to request the manifest file to each one of the de-multicaster devices to be used for receiving the segments of the audio and/or video content in question, since receiving the request REQ_M and responding thereto is used to detect a start of session. When Adaptive Bit Rate is not implemented, there is no manifest file. Thus, in a variant, the de-multicaster device DM2 152 and the de-multicaster device DM3 153 detect the start of the session upon receiving a dedicated message from the proxy device PXY 1100. In another variant, the de-multicaster device DM3 153 detect the start of the session upon receiving a first (in sequence) request REQ_C (as detailed below) from the proxy device PXY 1100 for the audio and/or video content in question.

The steps 1111 to 1118 jointly form a process MM_RET 1110 of retrieving the manifest file of the selected audio and/or video content.

Then, in a step 1121, the player PL1 121 transmits to the proxy device PXY 1100 a request REQ_C. The request REQ_C is a unicast message requesting receiving at least one segment of the selected audio and/or video content. The request REQ_C therefore contains information representative of the selected audio and/or video content (e.g., an URL path pointing to the selected audio and/or video content). For instance, the request REQ_C is a HTTP Get message, further including a parameter indicating in which representation (quality) the at least one segment is requested. The request REQ_C further includes the further parameters (e.g. inline parameters) provided by the application APP1 131 in the message LAUNCH in the step 1109, namely the identifiers of the de-multicaster device DM2 152 and of the de-multicaster device DM3 153. The proxy device PXY 1100 thus knows from the request REQ_C transmitted by the player PL1 121 in the step 1121 which de-multicaster devices to be used for the multipath delivery.

Consequently, in a step 1122, the proxy device PXY 1100 transmits to the de-multicaster device DM2 152 or, in a step 1123, to the de-multicaster device DM3 153, a request REQ_C. The request REQ_C is a unicast message requesting receiving the at least one segment of the selected audio and/or video content, as requested by the player PL 121. The request REQ_C transmitted by the proxy device PXY 1100 therefore contains information representative of the selected audio and/or video content (e.g., an URL path pointing to the selected audio and/or video content). The proxy device PXY 1100 selects to which de-multicaster device the request REQ_C, among the de-multicaster device DM2 152 and the de-multicaster device DM3 153, has to be transmitted according to a predetermined load balancing rule. For instance, the load balancing rule is of round-robin type. In a step 1124, in response to the request REQ_C transmitted in the step 1122, the de-multicaster device DM2 152 transmits a response RSP_C including at least one segment of the audio and/or video content. In a step 1125, in response to the request REQ_C transmitted in the step 1123, the de-multicaster device DM3 153 transmits a response RSP_C including at least one segment of the audio and/or video content.

Then, in a step 1126, the proxy device PXY 1100 transmits a response RSP_C to the player PL1 121, in response to the request REQ_C transmitted by the player PL1 121 in the step 1121. The response RSP_C includes at least one segment of the audio and/or video content as either received from the de-multicaster device DM2 152 in the step 1124 or received from the de-multicaster device DM3 153 in the step 1125. The player PL1 121 can then consume the received at least one segment. The steps 1121 to 1126 can be reiterated so as to enable the player PL1 121 to further receive at least one subsequent segment of the selected audio and/or video content.

The steps 1121 to 1126 jointly form a process MC_RET 1120 of delivering the selected audio and/or video content.

Switching now to Fig. 11B (where the process MC_RET 1120 also appears for understanding considerations), the application APP1 131 detects in a step 1130 that the player PL1 121 has ended the session. This may be done by the player PL1 121 notifying the application APP1 131 (e.g. by a message STOP) that consumption of the audio and/or video content has ended.

In a step 1131, the application APP1 131 notifies (e.g. by a message STOP) the de-multicaster device DM2 152 that consumption of the audio and/or video content has ended; and in a step 1133, the application APP1 131 notifies (e.g. by a message STOP) the de-multicaster device DM3 153 that consumption of the audio and/or video content has ended. In a variant without notifications from the application APP1 131, the de-multicaster device DM2 152 and the de-multicaster device DM3 153 are able to detect that the session for delivering said audio and/or video content to the player PL1 121 via the proxy device PXY 1100 has ended, when the predefined time PT1 has elapsed since the latest transmission of a request (either REQ_M or REQ_C) in the process MC_RET 1120. This triggers, internally to the de-multicaster device DM2 152 (step 1132) and internally to the de-multicaster device DM3 153 (step 1134), a recordation of the stop of the session.

Despite the end of the session, the de-multicaster device DM2 152 and the de-multicaster device DM3 153 hold in place processing resources for a potential upcoming session for delivering an audio and/or video content to the player PL1 121 via the proxy device PXY 1100. The processing resources in question are hold in place for the predefined time PT2. If no subsequent session is started within said predefined time PT2 for delivering an audio and/or video content to the player PL1 121 via the proxy PXY 1100, the de-multicaster device DM2 152 and the de-multicaster device DM3 153 free the processing resources in question. In the case where a new session is initiated whereas the predefined time PT2 has expired since the end of the preceding session, availability of processing resources for the new session cannot be ensured by the de-multicaster device DM2 152 and the de-multicaster device DM3 153. New selection of de-multicasters for multipath delivery would have then to be performed, by using an updated version of the ordered list L.

Thus, considering that a new session is initiated before expiration of the predefined time PT2, the application APP1 131 selects, in a step 1135, the same or another audio and/or video content to be consumed (process C_SEL).

Next, in a step 1136, the application APP1 131 asks the de-multicaster device DM2 152 whether or not the newly selected audio and/or video content to be consumed is made available. To do so, the application APP1 131 transmits to the de-multicaster device DM2 152 a request REQ_CHK including information representative of the newly selected audio and/or video content and requesting confirmation that the newly selected audio and/or video content is made available.

Thus, in a step 1137, the de-multicaster device DM2 152 transmits to the de-multicaster device DM3 153 a request REQ_CHK including information representative of the newly selected audio and/or video content and requesting confirmation that the newly selected audio and/or video content is made available. The de-multicaster device DM2 152 sends the request REQ_CHK to the de-multicaster device DM3 153 because the de-multicaster device DM3 153 was implied in the multipath delivery for the preceding session with the player PL1 121 via the proxy device PXY 1100.

Then, in a step 1138, the de-multicaster device DM3 153 transmits a response RSP_CHK to the request REQ_CHK transmitted by the de-multicaster device DM2 152 in the step 1137. In addition to including an error code or a confirmation code, the response RSP_CHK further includes capacity information related to the de-multicaster device DM3 153 (as already addressed with respect to Fig. 7). Let's illustratively consider that the de-multicaster device DM3 153 is able to deliver the newly selected audio and/or video content and that the response RSP_CHK includes a corresponding confirmation code.

Since the de-multicaster device DM2 152 was also implied in the multipath delivery for the preceding session with the player PL1 121 via the proxy device PXY 1100, the de-multicaster device DM2 152 checks internally whether or not the de-multicaster device DM2 152 is able to deliver the newly selected audio and/or video content. Let's illustratively consider that the de-multicaster device DM2 152 is also able to deliver the newly selected audio and/or video content.

Then, in a step 1139, the de-multicaster device DM2 152 transmits to the application APP1 131 a response RSP_CHK to the request REQ_CHK transmitted by the application APP1 131 in the step 1136. The response RSP_CHK indicates that the de-multicaster device DM2 152 and the de-multicaster device DM3 153 are able to deliver the newly selected audio and/or video content, and the response RSP_CHK includes a corresponding confirmation code. No need to include capacity information in this response RSP_CHK, since the application APP1 131 relies on the de-multicaster device DM2 152 for selecting the appropriate de-multicaster devices for delivering the audio and/or video content.

In a step 1140, the application APP1 131 restarts the player PL1 121 for consuming the newly selected audio and/or video content. To do so, the application APP1 131 transmits to the player PL1 121 a message LAUNCH including an identifier of the proxy device PXY 1100 (e.g., IP address of the proxy device PXY 1100) and information representative of the newly selected audio and/or video content (e.g., an URL path pointing to the newly selected audio and/or video content or preferably to a manifest file representative thereof), and as further parameters an identifier of each de-multicaster device (e.g., IP address of the de-multicaster in question) to be used for the multipath delivery of the selected audio and/or video content. In our example, the further parameters are identifiers of the de-multicaster device DM2 152 and of the de-multicaster device DM3 153 (e.g., their IP addresses). Then, in a step 1141, the processes MM_RET and MC_RET are performed between the player PL1 121, the proxy device PXY 1100, the de-multicaster device DM2 152 and the de-multicaster device DM3 153 for delivering the newly selected audio and/or video content. Identically as explained in the process MM_RET 1110, the de-multicaster device DM2 152 and the de-multicaster device DM3 153 perform a recordation of the start of the new session when respectively receiving the requests REQ_M and responding thereto. In a variant, the de-multicaster device DM2 152 and the de-multicaster device DM3 153 detect the start of the new session upon receiving a dedicated message from the proxy device PXY 1100. In another variant, the de-multicaster device DM3 153 detect the start of the new session upon receiving a first (in sequence) request REQ_C from the proxy device PXY 1100 for the audio and/or video content in question.

In a particular embodiment, considering that several players may use support of the proxy device PXY 1100, the proxy device PXY 1100 may indicate in its messages transmitted to the de-multicaster device DM2 152 and to the de-multicaster device DM3 153 that said messages concern a session on behalf of the player PL1 121 (e.g., using the IP address of the terminal T1 111). For instance, the field "Forwarded" of HTTP messages can be used for such purpose. Thus, the de-multicaster device DM2 152 and the de-multicaster device DM3 153 are aware of the identity of the player for which such or such starts or ends.

The multipath embodiment of Figs. 11A and 11B may be combined with embodiments for obtaining up-to-date capacity information as depicted above with respect to Figs. 4, 5, 6, 8, 9 and 10.

The description of Figs. 11A and 11B relies on messages exchanged between the player (e.g., player PL1 121) and the proxy device PXY 1100. When the proxy device PXY 1100 and the player are located within the same terminal (e.g., terminal T1 111), the messages can take the form of API (Application Programming Interface) calls.

Furthermore, the description of Figs. 11A and 11B relies on messages exchanged between an application (e.g., application APP1 131) associated with a player (e.g, player PL1 121) and the proxy device PXY 1100. When the application in question and the proxy device PXY 1100 are located within the same terminal (e.g., terminal T1 111), the messages can take the form of API calls.

More generally, the foregoing detailed description relies on messages exchanged between the player (e.g., player PL1 121) and an associated application (e.g., application APP1 131). When the application and the player are located within the same terminal (e.g., terminal T1 111), the messages can take the form of API calls.

As already indicated, the foregoing detailed description has been presented by illustratively considering that the audio and/or video contents are delivered in multicast fashion (broadcast transmission being a particular case of multicast transmission). However, unicast transmissions may in a variant be used with the content delivery server equipment CDE 160. Thus, generally speaking, the de-multicaster devices are content delivery network (CDN) receiver devices, which enable terminal devices in the local area network LAN 101 to receive the audio and/or video contents, which are delivered by the content delivery server equipment CDE 160 via the at least one provider network PN 102, by transferring the segments thereof in the local area network LAN 101.

## Claims

1. A method for delivering audio and/or video contents to a player in a local area network, the local area network comprising a plurality of content delivery network CDN receiver devices, the CDN receiver devices receiving audio and/or video contents in form of segments through at least one provider network and the CDN receiver devices transferring the received segments of the audio and/or video contents in the local area network so as to enable player-equipped terminals in the local area network to receive the audio and/or video contents, wherein the method comprises:
- obtaining capacity information from the CDN receiver devices, the capacity information being indication of processing resources actually in use compared with total capacity of the CDN receiver devices;
- selecting, according to the capacity information, at least one CDN receiver device for delivering an audio and/or video content to the player;
- detecting that a session for delivering the audio and/or video content to the player starts and ends;
- when the session for delivering the audio and/or video content from the selected at least one CDN receiver device to the player ends, the selected at least one CDN receiver device holds in place, during a predefined time duration, processing resources for a potential upcoming session for delivering the same or another audio and/or video content to the player;
- when another session for delivering another audio and/or video content to the player starts before expiry of the predefined time duration, said same or another audio and/or video content is delivered to the player by said selected at least one CDN receiver device using the processing resources hold in place; and
- when another session for delivering said same or another audio and/or video content to the player starts after expiry of the predefined time duration, reselection of at least one CDN receiver device, according to updated capacity information, is performed to deliver said another audio and/or video content to the player.

2. The method according to claim 1, wherein the audio and/or video contents are made available to the CDN receivers in various representations so as to enable adaptive bit rate ABR.

3. The method according to claim 2, wherein the selected at least one CDN receiver device detects that the session for delivering the audio and/or video content to the player starts, when receiving a request for obtaining a manifest file of the audio and/or video content.

4. The method according to claim 1, wherein the selected at least one CDN receiver device detects that the session for delivering the audio and/or video content to the player starts, when receiving a message indicating that said session starts.

5. The method according to any one of claims 1 to 4, wherein the selected at least one CDN receiver device detects that the session for delivering the audio and/or video content to the player ends, when detecting that no request related to said delivery of the audio and/or video content to the player has been received by said selected at least one CDN receiver device during a predefined time duration.

6. The method according to any one of claims 1 to 5, wherein the audio and/or video contents are made available to the CDN receivers in multicast form and the CDN receiver devices are de-multicasters converting in unicast form the segments received in multicast form through the at least one provider network.

7. The method according to any one of claims 1 to 6, wherein each CDN receiver device transmits its capacity information at the same time as responding to a request for checking whether or not the audio and/or video content to be consumed is made available through the CDN receiver device in question.

8. The method according to claim 7, wherein, when the capacity information transmitted by at least one CDN receiver device in response to a request for checking whether or not the audio and/or video content to be consumed is made available through the CDN receiver device in question has changed, the method further comprises requesting capacity information to each other CDN receiver device in order to obtain updated capacity information.

9. The method according to any one of claims 1 to 8, wherein obtaining capacity information from the CDN receiver devices and selecting, according to the capacity information, the at least one CDN receiver device for delivering the audio and/or video content to the player are performed by an application associated with the player.

10. The method according to any one of claims 1 to 8, wherein obtaining capacity information from the CDN receiver devices and selecting, according to the capacity information, the at least one CDN receiver device for delivering the audio and/or video content to the player are performed by one CDN receiver to which an application associated with the player requests whether or not the audio and/or video content to be consumed is made available through the CDN receiver device in question.

11. The method according to any one of claims 1 to 10, wherein when the session implies delivering the audio and/or video content to the player from plural selected CDN receiver devices, the player communicates with a proxy device for receiving the segments of the audio and/or video content and the proxy device communicates with the plural selected CDN receiver devices for obtaining the segments of the audio and/or video content while managing load balancing for delivering the audio and/or video content to the player.

12. The method according to claim 11, wherein, when the proxy device receives from the player a request for obtaining a manifest file of the audio and/or video content, the proxy device transmits one such request for obtaining a manifest file of the audio and/or video content to each one of said plural selected CDN receiver devices.

13. An audio and/or video contents delivery system configured for delivering audio and/or video contents to a player in a local area network, the local area network comprising a plurality of content delivery network CDN receiver devices of the audio and/or video contents delivery system, the CDN receiver devices receiving audio and/or video contents in form of segments through at least one provider network and the CDN receiver devices transferring the received segments of the audio and/or video contents in the local area network so as to enable player-equipped terminals in the local area network to receive the audio and/or video contents, wherein the audio and/or video contents delivery system comprises:
- means for obtaining capacity information from the CDN receiver devices, the capacity information being indication of processing resources actually in use compared with total capacity of the CDN receiver devices;
- means for selecting, according to the capacity information, at least one CDN receiver device for delivering an audio and/or video content to the player;
- means for detecting that a session for delivering the audio and/or video content to the player starts and ends;
and wherein the audio and/or video contents delivery system is further configured as follows:
- when the session for delivering the audio and/or video content from the selected at least one CDN receiver device to the player ends, the selected at least one CDN receiver device holds in place, during a predefined time duration, processing resources for a potential upcoming session for delivering the same or another audio and/or video content to the player;
- when another session for delivering another audio and/or video content to the player starts before expiry of the predefined time duration, said same or another audio and/or video content is delivered to the player by said selected at least one CDN receiver device using the processing resources hold in place; and
- when another session for delivering said same or another audio and/or video content to the player starts after expiry of the predefined time duration, reselection of at least one CDN receiver device, according to updated capacity information, is performed to deliver said another audio and/or video content to the player.

## Patentansprüche

1. Verfahren zum Liefern von Audio- und/oder Videoinhalten an ein Abspielgerät in einem lokalen Netz, wobei das lokale Netz mehrere Inhaltsliefernetz-Empfängervorrichtungen, CDN-Empfängervorrichtungen, umfasst, wobei die CDN-Empfängervorrichtungen Audio- und/oder Videoinhalte in der Form von Segmenten durch mindestens ein Anbieternetz empfangen und die CDN-Empfängervorrichtungen die empfangenen Segmente der Audio- und/oder Videoinhalte in das lokale Netz übertragen, um mit Abspielgeräten ausgestatteten Endgeräten in dem lokalen Netz zu ermöglichen, die Audio- und/oder Videoinhalte zu empfangen, wobei das Verfahren Folgendes umfasst:
- Erhalten von Fähigkeitsinformationen von den CDN-Empfängervorrichtungen, wobei die Fähigkeitsinformationen eine Angabe von Verarbeitungsbetriebsmitteln, die tatsächlich in Verwendung sind, im Vergleich zu der Gesamtkapazität der CDN-Empfängervorrichtungen sind;
- Auswählen gemäß den Fähigkeitsinformationen mindestens einer CDN-Empfängervorrichtung zum Liefern eines Audio- und/oder Videoinhalts an das Abspielgerät;
- Detektieren, dass eine Sitzung zum Liefern des Audio- und/oder Videoinhalts an das Abspielgerät startet und endet;
- wobei dann, wenn die Sitzung zum Liefern des Audio- und/oder Videoinhalts von der ausgewählten mindestens einen CDN-Empfängervorrichtung an das Abspielgerät endet, die ausgewählte mindestens eine CDN-Empfängervorrichtung während einer im Voraus definierten Zeitdauer Verarbeitungsbetriebsmittel für eine potenzielle kommende Sitzung zum Liefern desselben oder eines anderen Audio- und/oder Videoinhalts an das Abspielgerät an Ort und Stelle hält;
- dann, wenn eine andere Sitzung zum Liefern eines anderen Audio- und/oder Videoinhalts an das Abspielgerät vor dem Ablauf der im Voraus definierten Zeitdauer startet, derselbe oder ein anderer Audio- und/oder Videoinhalt an das Abspielgerät durch die ausgewählte mindestens eine CDN-Empfängervorrichtung unter Verwendung der an Ort und Stelle gehaltenen Verarbeitungsbetriebsmittel geliefert wird; und
- dann, wenn eine andere Sitzung zum Liefern desselben oder eines anderen Audio- und/oder Videoinhalts an das Abspielgerät nach dem Ablauf der im Voraus definierten Zeitdauer startet, eine Neuauswahl mindestens einer CDN-Empfängervorrichtung gemäß aktualisierten Kapazitätsinformationen ausgeführt wird, um den anderen Audio- und/oder Videoinhalt an das Abspielgerät zu liefern.

2. Verfahren nach Anspruch 1, wobei die Audio- und/oder Videoinhalte den CDN-Empfängervorrichtung in verschiedenen Repräsentationen zur Verfügung gestellt werden, um eine adaptive Bitrate, ABR, zu ermöglichen.

3. Verfahren nach Anspruch 2, wobei die ausgewählte mindestens eine CDN-Empfängervorrichtung detektiert, dass die Sitzung zum Liefern des Audio- und/oder Videoinhalts an das Abspielgerät startet, wenn eine Anforderung zum Erhalten einer Manifestdatei des Audio- und/oder Videoinhalts empfangen wird.

4. Verfahren nach Anspruch 1, wobei die ausgewählte mindestens eine CDN-Empfängervorrichtung detektiert, dass die Sitzung zum Liefern des Audio- und/oder Videoinhalts an das Abspielgerät startet, wenn eine Nachricht empfangen wird, die angibt, dass die Sitzung startet.

5. Verfahren nach einem der Ansprüche 1 bis 4, wobei die ausgewählte mindestens eine CDN-Empfängervorrichtung detektiert, dass die Sitzung zum Liefern des Audio- und/oder Videoinhalts an das Abspielgerät endet, wenn detektiert wird, dass keine Anforderung bezüglich der Lieferung des Audio- und/oder Videoinhalts an das Abspielgerät durch die ausgewählte mindestens eine CDN-Empfängervorrichtung während einer im Voraus definierten Zeitdauer empfangen wurde.

6. Verfahren nach einem der Ansprüche 1 bis 5, wobei die Audio- und/oder Videoinhalte den CDN-Empfängern in einer Multicastform zur Verfügung gestellt werden und die CDN-Empfängervorrichtung De-Multicaster sind, die die in Multicastform durch das mindestens eine Anbieternetz empfangenen Segmente in Unicastform umsetzen.

7. Verfahren nach einem der Ansprüche 1 bis 6, wobei jede CDN-Empfängervorrichtung ihre Kapazitätsinformationen zur selben Zeit sendet, wie sie auf eine Anforderung zum Überprüfen, ob der zu konsumierende Audio- und/oder Videoinhalt durch die fragliche CDN-Empfängervorrichtung zur Verfügung gestellt wird oder nicht, antwortet.

8. Verfahren nach Anspruch 7, wobei dann, wenn sich die durch mindestens eine CDN-Empfängervorrichtung als Reaktion auf eine Anforderung zum Überprüfen, ob der zu konsumierende Audio- und/oder Videoinhalt durch die fraglich CDN-Empfängervorrichtung zur Verfügung gestellt wird oder nicht, gesendeten Kapazitätsinformationen geändert haben, das Verfahren ferner umfasst, Kapazitätsinformationen von jeder anderen CDN-Empfängervorrichtung anzufordern, um aktualisierte Kapazitätsinformationen zu erhalten.

9. Verfahren nach einem der Ansprüche 1 bis 8, wobei das Erhalten von Kapazitätsinformationen von den CDN-Empfängervorrichtungen und das Auswählen gemäß den Kapazitätsinformationen der mindestens einen CDN-Empfängervorrichtung zum Liefern des Audio- und/oder Videoinhalts an das Abspielgerät durch eine Anwendung, die dem Abspielgerät zugeordnet ist, ausgeführt werden.

10. Verfahren nach einem der Ansprüche 1 bis 8, wobei das Erhalten von Kapazitätsinformationen von den CDN-Empfängervorrichtungen und das Auswählen gemäß den Kapazitätsinformationen der mindestens einen CDN-Empfängervorrichtung zum Liefern des Audio- und/oder Videoinhalts an das Abspielgerät durch einen CDN-Empfängervorrichtung ausgeführt werden, den eine Anwendung, die dem Abspielgerät zugeordnet ist, fragt, ob der zu konsumierende Audio- und/oder Videoinhalt durch die fragliche CDN-Empfängervorrichtung zur Verfügung gestellt wird oder nicht.

11. Verfahren nach einem der Ansprüche 1 bis 10, wobei dann, wenn die Sitzung beinhaltet, den Audio- und/oder Videoinhalt von mehreren ausgewählten CDN-Empfängervorrichtungen an das Abspielgerät zu liefern, das Abspielgerät mit einer Proxy-Vorrichtung zum Empfangen der Segmente des Audio- und/oder Videoinhalts kommuniziert und die Proxy-Vorrichtung mit den mehreren ausgewählten CDN-Empfängervorrichtung kommuniziert, um die Segmente des Audio und/oder Videoinhalts zu erhalten, während sie einen Lastausgleich zum Liefern des Audio- und/oder Videoinhalts an das Abspielgerät managt.

12. Verfahren nach Anspruch 11, wobei dann, wenn die Proxy-Vorrichtung von dem Abspielgerät eine Anforderung zum Erhalten einer Manifestdatei des Audio- und/oder Videoinhalts empfängt, die Proxy-Vorrichtung eine solche Anforderung zum Erhalten einer Manifestdatei des Audio- und/oder Videoinhalts an jede von mehreren ausgewählten CDN-Empfängervorrichtungen sendet.

13. Audio- und/oder Videoinhaltsliefersystem, das konfiguriert ist, Audio- und/oder Videoinhalte an ein Abspielgerät in einem lokalen Netz zu liefern, wobei das lokale Netz mehrere Inhaltsliefernetz-Empfängervorrichtungen, CDN-Empfängervorrichtungen, des Audio- und/oder Videoinhaltsliefersystems umfasst, wobei die CDN-Empfängervorrichtungen Audio- und/oder Videoinhalte in der Form von Segmenten durch mindestens ein Anbieternetz empfangen und die CDN-Empfängervorrichtungen die empfangenen Segmente der Audio- und/oder Videoinhalte in das lokale Netz übertragen, um mit Abspielgeräten ausgestatteten Endgeräten in dem lokalen Netz zu ermöglichen, die Audio- und/oder Videoinhalte zu empfangen, wobei das Audio- und/oder Videoliefersystem Folgendes umfasst:
- Mittel zum Erhalten von Fähigkeitsinformationen von den CDN-Empfängervorrichtungen, wobei die Fähigkeitsinformationen eine Angabe von Verarbeitungsbetriebsmitteln, die tatsächlich in Verwendung sind, im Vergleich zu der Gesamtkapazität der CDN-Empfängervorrichtungen sind;
- Mittel zum Auswählen gemäß den Fähigkeitsinformationen mindestens einer CDN-Empfängervorrichtung zum Liefern eines Audio- und/oder Videoinhalts an das Abspielgerät;
- Mittel zum Detektieren, dass eine Sitzung zum Liefern des Audio- und/oder Videoinhalts an das Abspielgerät startet und endet;
und wobei das Audio- und/oder Videoinhaltsliefersystem ferner wie folgt konfiguriert ist:
- dann, wenn die Sitzung zum Liefern des Audio- und/oder Videoinhalts von der ausgewählten mindestens einen CDN-Empfängervorrichtung an das Abspielgerät endet, hält die ausgewählte mindestens eine CDN-Empfängervorrichtung während einer im Voraus definierten Zeitdauer Verarbeitungsbetriebsmittel für eine potenzielle kommende Sitzung zum Liefern desselben oder eines anderen Audio- und/oder Videoinhalts an das Abspielgerät an Ort und Stelle;
- dann, wenn eine andere Sitzung zum Liefern eines anderen Audio- und/oder Videoinhalts an das Abspielgerät vor dem Ablauf der im Voraus definierten Zeitdauer startet, wird derselbe oder ein anderer Audio- und/oder Videoinhalt durch die ausgewählte mindestens eine CDN-Empfängervorrichtung unter Verwendung der an Ort und Stelle gehaltenen Verarbeitungsbetriebsmittel an das Abspielgerät geliefert; und
- dann, wenn eine andere Sitzung zum Liefern desselben oder eines anderen Audio- und/oder Videoinhalts an das Abspielgerät nach dem Ablauf der im Voraus definierten Zeitdauer startet, wird eine Neuauswahl mindestens einer CDN-Empfängervorrichtung gemäß aktualisierten Kapazitätsinformationen ausgeführt, um den anderen Audio- und/oder Videoinhalt an das Abspielgerät zu liefern.

## Revendications

1. Procédé de diffusion de contenus audio et/ou vidéo à un lecteur dans un réseau local, le réseau local comprenant une pluralité de dispositifs récepteurs CDN de réseau de diffusion de contenu, les dispositifs récepteurs CDN recevant des contenus audio et/ou vidéo sous forme de segments via au moins un réseau fournisseur et les dispositifs récepteurs CDN transférant les segments des contenus audio et/ou vidéo reçus dans le réseau local de manière à permettre à des terminaux équipés d'un lecteur dans le réseau local de recevoir les contenus audio et/ou vidéo, le procédé comprenant :
- obtenir des informations de capacité auprès des dispositifs récepteurs CDN, les informations de capacité indiquant des ressources de traitement effectivement utilisées par rapport à la capacité totale des dispositifs récepteurs CDN ;
- sélectionner, en fonction des informations de capacité, d'au moins un dispositif récepteur CDN pour diffuser un contenu audio et/ou vidéo au lecteur ;
- détecter qu'une session pour diffuser le contenu audio et/ou vidéo au lecteur commence et se termine ;
- lorsque la session pour diffuser au lecteur le contenu audio et/ou vidéo de l'au moins un dispositif récepteur CDN sélectionné se termine, l'au moins un dispositif récepteur CDN sélectionné maintient en place, pendant une durée prédéfinie, des ressources de traitement pour une session à venir éventuelle pour diffuser le même ou un autre contenu audio et/ou vidéo au lecteur ;
- lorsqu'une autre session pour diffuser un autre contenu audio et/ou vidéo au lecteur commence avant l'expiration de la durée prédéfinie, ledit même ou autre contenu audio et/ou vidéo est diffusé au lecteur par ledit au moins un dispositif récepteur CDN sélectionné, en utilisant les ressources de traitement maintenues en place ; et
- lorsqu'une autre session pour diffuser ledit même ou autre contenu audio et/ou vidéo au lecteur commence après l'expiration de la durée prédéfinie, une nouvelle sélection d'au moins un dispositif récepteur CDN, en fonction d'informations de capacité mises à jour, est réalisée pour diffuser ledit autre contenu audio et/ou vidéo au lecteur.

2. Procédé selon la revendication 1, dans lequel les contenus audio et/ou vidéo sont rendus disponibles aux récepteurs CDN dans des représentations diverses de manière à permettre un débit binaire adaptatif ABR.

3. Procédé selon la revendication 2, dans lequel l'au moins un dispositif récepteur CDN sélectionné détecte que la session pour diffuser le contenu audio et/ou vidéo au lecteur commence, lors de la réception d'une requête pour obtenir un fichier manifeste du contenu audio et/ou vidéo.

4. Procédé selon la revendication 1, dans lequel l'au moins un dispositif récepteur CDN sélectionné détecte que la session pour diffuser le contenu audio et/ou vidéo au lecteur commence, lors de la réception d'un message indiquant que ladite session commence.

5. Procédé selon l'une quelconque des revendications 1 à 4, dans lequel l'au moins un dispositif récepteur CDN sélectionné détecte que la session pour diffuser le contenu audio et/ou vidéo au lecteur se termine, lors de la détection qu'aucune requête concernant ladite diffusion du contenu audio et/ou vidéo au lecteur n'a été reçue par ledit au moins un dispositif récepteur CDN sélectionné pendant une durée prédéfinie.

6. Procédé selon l'une quelconque des revendications 1 à 5, dans lequel les contenus audio et/ou vidéo sont rendus disponibles aux récepteurs CDN sous forme multidiffusion et les dispositifs récepteurs CDN sont des stations de dé-multidiffusion convertissant sous forme monodiffusion les segments reçus sous forme multidiffusion via l'au moins un réseau fournisseur.

7. Procédé selon l'une quelconque des revendication 1 à 6, dans lequel chaque dispositif récepteur CDN transmet ses informations de capacité en même temps que celui-ci répond à une requête pour vérifier si le contenu audio et/ou vidéo à consommer est rendu disponible ou non via le dispositif récepteur CDN en question.

8. Procédé selon la revendication 7, dans lequel, lorsque les informations de capacité transmises par au moins un dispositif récepteur CDN en réponse à une requête pour vérifier si le contenu audio et/ou vidéo à consommer est rendu disponible ou non via le dispositif récepteur CDN en question ont changé, le procédé comporte en outre de demander des informations de capacité à chaque autre dispositif récepteur CDN dans le but d'obtenir des informations de capacité mises à jour.

9. Procédé selon l'une quelconque des revendications 1 à 8, dans lequel les étapes d'btenir des informations de capacité auprès des dispositifs récepteurs CDN et de sélectionner, en fonction des informations de capacité, l'au moins un dispositif récepteur CDN pour diffuser le contenu audio et/ou vidéo au lecteur sont réalisées par une application associée au lecteur.

10. Procédé selon l'une quelconque des revendications 1 à 8, dans lequel les étapes d'obtenir des informations de capacité des dispositifs récepteurs CDN et de sélectionner, en fonction des informations de capacité, l'au moins un dispositif récepteur CDN pour diffuser le contenu audio et/ou vidéo au lecteur sont réalisées par un récepteur CDN auquel une application associée au lecteur demande si le contenu audio et/ou vidéo à consommer est rendu disponible ou non via le dispositif récepteur CDN en question.

11. Procédé selon l'une quelconque des revendications 1 à 10, dans lequel, lorsque la session implique la diffusion du contenu audio et/ou vidéo au lecteur depuis plusieurs dispositifs récepteurs CDN sélectionnés, le lecteur communique avec un dispositif mandataire pour recevoir les segments du contenu audio et/ou vidéo et le dispositif mandataire communique avec les plusieurs dispositifs récepteurs CDN sélectionnés pour obtenir les segments du contenu audio et/ou vidéo tout en gérant l'équilibrage de charge pour diffuser le contenu audio et/ou vidéo au lecteur.

12. Procédé selon la revendication 11, dans lequel, lorsque le dispositif mandataire reçoit du lecteur une requête pour obtenir un fichier manifeste du contenu audio et/ou vidéo, le dispositif mandataire transmet une telle requête pour obtenir un fichier manifeste du contenu audio et/ou vidéo à chacun desdits plusieurs dispositifs récepteurs CDN sélectionnés.

13. Système de diffusion de contenus audio et/ou vidéo configuré pour diffuser des contenus audio et/ou vidéo à un lecteur dans un réseau local, le réseau local comprenant une pluralité de dispositifs récepteurs CDN de réseau de diffusion de contenu du système de diffusion de contenus audio et/ou vidéo, les dispositifs récepteurs CDN recevant des contenus audio et/ou vidéo sous forme de segments via au moins un réseau fournisseur et les dispositifs récepteurs CDN transférant les segments des contenus audio et/ou vidéo reçus dans le réseau local de manière à permettre à des terminaux équipés d'un lecteur dans le réseau local de recevoir les contenus audio et/ou vidéo, le système de diffusion de contenus audio et/ou vidéo comprenant :
- des moyens pour obtenir des informations de capacité auprès des dispositifs récepteurs CDN, les informations de capacité indiquant des ressources de traitement effectivement utilisées par rapport à la capacité totale des dispositifs récepteurs CDN ;
- des moyens pour sélectionner, en fonction des informations de capacité, au moins un dispositif récepteur CDN pour diffuser un contenu audio et/ou vidéo au lecteur ;
- des moyens pour détecter qu'une session pour diffuser le contenu audio et/ou vidéo au lecteur commence et se termine ;
et le système de diffusion de contenus audio et/ou vidéo étant en outre configuré comme suit :
- lorsque la session pour diffuser le contenu audio et/ou vidéo de l'au moins un dispositif récepteur CDN sélectionné au lecteur se termine, l'au moins un dispositif récepteur CDN sélectionné maintient en place, pendant une durée prédéfinie, des ressources de traitement pour une session à venir éventuelle pour diffuser le même ou un autre contenu audio et/ou vidéo au lecteur ;
- lorsqu'une autre session pour diffuser un autre contenu audio et/ou vidéo au lecteur commence avant l'expiration de la durée prédéfinie, ledit même ou autre contenu audio et/ou vidéo est diffusé au lecteur par ledit au moins un dispositif récepteur CDN sélectionné, en utilisant les ressources de traitement maintenues en place ; et
- lorsqu'une autre session pour diffuser ledit même ou autre contenu audio et/ou vidéo au lecteur commence après l'expiration de la durée prédéfinie, une nouvelle sélection d'au moins un dispositif récepteur CDN, en fonction d'informations de capacité mises à jour, est réalisée pour diffuser ledit autre contenu audio et/ou vidéo au lecteur.
